(19) Europäisches Patentamt / European Patent Office / Office européen des brevets

(11) **EP 4 254 892 A1**

(12) **EUROPEAN PATENT APPLICATION**
published in accordance with Art. 153(4) EPC

(43) Date of publication:
**04.10.2023 Bulletin 2023/40**

(21) Application number: **21909556.9**

(22) Date of filing: **24.12.2021**

(51) International Patent Classification (IPC):
**H04L 41/082** *(2022.01)* **H04L 67/5682** *(2022.01)*

(52) Cooperative Patent Classification (CPC):
**H04L 41/082; H04W 24/02**

(86) International application number:
**PCT/CN2021/141164**

(87) International publication number:
**WO 2022/135561 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2020 CN 202011573227**

(71) Applicant: **Huawei Technologies Co., Ltd. Shenzhen, Guangdong 518129 (CN)**

(72) Inventors:
• **LIU, Yong**
  **Shenzhen, Guangdong 518129 (CN)**
• **BI, Xiaoyan**
  **Shenzhen, Guangdong 518129 (CN)**
• **CHEN, Dageng**
  **Shenzhen, Guangdong 518129 (CN)**
• **MA, Jianglei**
  **Shenzhen, Guangdong 518129 (CN)**

(74) Representative: **Epping - Hermann - Fischer Patentanwaltsgesellschaft mbH Schloßschmidstraße 5 80639 München (DE)**

(54) **INTELLIGENT COMPONENT UPDATE METHOD AND COMMUNICATION DEVICE**

(57) This application provides an intelligent component update method and a communication apparatus. A transmitting end sends indication information about one or more intelligent components to a receiving end. The indication information indicates a to-be-updated intelligent component of the transmitting end and/or a to-be-updated intelligent component of the receiving end. The to-be-updated intelligent component of the transmitting end belongs to a first intelligent module, and the to-be-updated intelligent component of the receiving end belongs to a second intelligent module. Based on the indication information, a to-be-updated indication can be performed for one or more intelligent components in an intelligent module, so that update efficiency and reliability of the intelligent module can be improved without affecting learning performance of the intelligent module, and update costs and system resource waste can be reduced.

FIG. 7

## Description

This application claims priority to Chinese Patent Application No. 202011573227.7, filed with the China National Intellectual Property Administration on December 24, 2020 and entitled "INTELLIGENT COMPONENT UPDATE METHOD AND COMMUNICATION APPARATUS", which is incorporated herein by reference in its entirety.

## TECHNICAL FIELD

This application relates to the communication field, more specifically, to a communication technology to which an intelligent module is applied, and specifically, to an intelligent component update method and a communication apparatus.

## BACKGROUND

In recent years, artificial intelligence (artificial intelligence, AI) technologies develop rapidly. The AI technologies include implementation technologies such as machine learning and deep learning. Implementation of the AI technologies is mainly to enable computers to find information from data and learn some rules, and to enable models to understand data more deeply through model training and optimization.

With the development of AI technologies, the application fields of the AI technologies are increasingly wide. In addition to application in the image and voice processing fields, it is a new trend to study application of the AI technologies in the communication field. For example, in a communication system, in many scenarios, the entire system may be designed in an end-to-end (End to End, E2E) joint optimization manner during information processing of a transmitting end and a receiving end, thereby greatly improving transmission performance. During information processing, the transmitting end and the receiving end may construct a problem model through joint optimization, or use mutual assistance information to improve overall performance. When intelligent modules (for example, neural networks, decision trees, or deep forests) are used for joint optimization of a transmitter and a receiver, the intelligent modules at the transmitting end and the receiving end need to be jointly designed to ensure convergence of the intelligent modules in training and excellent performance in inference. The implementation process is not limited to joint construction of a cost function, or construction of final intelligent modules of the receiving end and the transmitting end using an autoencoder (Autoencoder, AE) structure or various change forms of an autoencoder structure, or a combination of other intelligent module structures.

In a communication system, when intelligent module training needs to be performed again for matching because a factor such as a scenario or a quantization algorithm changes, there are many complex factors and situations changing in the communication system, and learning performance of an intelligent module is related to complexity. Therefore, update of the intelligent module faces problems such as low efficiency, low reliability, high update costs, and system resource waste.

## SUMMARY

This application provides an intelligent component update method and an apparatus, to improve update efficiency and reliability of an intelligent module.

According to a first aspect, this application provides an intelligent component update method. The method may be performed by a transmitting apparatus. The transmitting apparatus may be a terminal device, or may be a chip, a chip system, or a circuit configured in a terminal device. Alternatively, the transmitting apparatus may be a network device, or may be a chip, a chip system, or a circuit configured in a network device. This is not limited in this application.

The method may include: generating indication information, where the indication information indicates one or more intelligent components to be updated at a local end and/or one or more intelligent components to be updated at a peer end. The one or more intelligent components to be updated at the local end belong to a first intelligent module, and the one or more intelligent components to be updated at the peer end belong to a second intelligent module; and the indication information is sent. It may be understood that the local end and the peer end may be divided based on a transmitting end and a receiving end of the indication information. The local end may be a transmitting apparatus side, and the peer end may be a receiving apparatus side.

It can be learned that, based on the foregoing technical solution, a to-be-updated indication can be performed for one or more intelligent components in an intelligent module, so that update efficiency and reliability of the intelligent module are improved while learning performance of the intelligent module is ensured, and update costs and system resource waste are reduced.

With reference to the first aspect, in some possible implementations, the first intelligent module and the second intelligent module are a same intelligent module. In some other possible implementations, the first intelligent module and the second intelligent module are different intelligent modules, for example, the first intelligent module is an intelligent module of the local end, and the second intelligent module is an intelligent module at the peer end. It can be understood that the local end and the peer end may share the intelligent module, or the intelligent module may be separately disposed at the local end and the peer end. In this way, flexibility of applying the AI technology to a communication network can be improved, and the intelligent module may be flexibly disposed based on a situation of the communication system.

With reference to the first aspect, in some possible implementations, the method further includes updating the one or more intelligent components of the local end based on update parameter information.

With reference to the first aspect, in some possible implementations, the update parameter information is obtained from the peer end, and/or the update parameter information is obtained from the local end. It may be understood that the update parameter information can be obtained in different manners, so that richness of a parameter source can be ensured.

With reference to the first aspect, in some possible implementations, the updating the one or more intelligent components of the local end based on update parameter information includes: for a non-to-be-updated intelligent component (that is, not a to-be-updated intelligent component) in the first intelligent module, keeping the intelligent module parameter of the non-to-be-updated intelligent component unchanged; and updating an intelligent module parameter of the one or more intelligent components based on the update parameter information. For the non-to-be-updated intelligent component, the intelligent module parameter is kept unchanged, so that update costs can be reduced and system resources can be saved.

With reference to the first aspect, in some possible implementations, the method further includes: sending an update terminate indication, or receiving an update terminate indication. For example, under a specific condition, sending or receiving of the update terminate indication is triggered, so as to effectively control and save system resources.

According to a second aspect, this application provides an intelligent component update method. The method may be performed by a receiving apparatus. The receiving apparatus may be a terminal device, or may be a chip, a chip system, or a circuit configured in a terminal device. Alternatively, the receiving apparatus may be a network device, or may be a chip, a chip system, or a circuit configured in a network device. This is not limited in this application.

The method may include: receiving indication information, where the indication information indicates at least one of the following: one or more intelligent components to be updated at a peer end, where the one or more intelligent components belong to a first intelligent module, and one or more intelligent components to be updated at a local end, where the one or more intelligent components belong to a second intelligent module; and determining a to-be-updated intelligent component. It may be understood that the local end and the peer end may be divided based on a receiving end and a transmitting end of the indication information. The local end may be a receiving apparatus side, and the peer end may be a transmitting apparatus side.

It can be learned that, based on the foregoing technical solution, a to-be-updated indication can be performed for one or more intelligent components in an intelligent module, so that update efficiency and reliability of the intelligent module are improved while learning performance of the intelligent module is ensured, and update costs and system resource waste are reduced.

With reference to the second aspect, in some possible implementations, the first intelligent module and the second intelligent module are a same intelligent module. In some possible implementations, the first intelligent module and the second intelligent module are different intelligent modules. For example, the first intelligent module is an intelligent module of the peer end, and the second intelligent module is an intelligent module of the local end. It can be understood that the local end and the peer end may share the intelligent module, or the intelligent module may be separately disposed at the local end and the peer end. In this way, flexibility of applying the AI technology to a communication network can be improved, and the intelligent module may be flexibly disposed based on a situation of the communication system.

With reference to the second aspect, in some possible implementations, the method further includes updating the one or more intelligent components of the local end based on update parameter information.

With reference to the second aspect, in some possible implementations, the method further includes: obtaining the update parameter information from the peer end, and/or obtaining the update parameter information from the local end. It may be understood that an update parameter can be obtained in different manners, so that richness of a parameter source can be ensured. With reference to the second aspect, in some possible implementations, the updating the one or more intelligent components of the local end based on update parameter information includes: for a non-to-be-updated intelligent component in the second intelligent module, keeping an intelligent module parameter of the non-to-be-updated intelligent component unchanged; and updating an intelligent module parameter of the one or more intelligent components based on the update parameter information. It may be understood that, for the non-to-be-updated intelligent component, the intelligent module parameter of the non-to-be-updated intelligent component is kept unchanged, so that update costs can be effectively reduced, and system resources can be saved. With reference to the second aspect, in some possible implementations, the method further includes: sending an update terminate indication, or receiving an update terminate indication. For example, under a specific condition, sending the update terminate indication or receiving the update terminate indication ensures effective control and saving of the system resources.

With reference to the first aspect or the second aspect, in some possible implementations, the indication information carries at least one piece of the following information: information about the to-be-updated intelligent component or information about the non-to-be-updated intelligent component in the first intelligent module, and information about the to-be-updated intelligent component or a non-to-be-updated intelligent component in the second intelligent module. It can be learned that indication manner of the indication information is flexible.

With reference to the first aspect or the second aspect, in some possible implementations, the indication information may further indicate an update request, and the indication information is sent through one or more pieces of signaling.

With reference to the first aspect or the second aspect, in some possible implementations, the update includes at least one of the following operations: intelligent component training, intelligent component adding, intelligent component deleting, intelligent component enabling, and intelligent component disabling. It can be learned that the update operation may be performed before, during, or after the intelligent module is constructed.

With reference to the first aspect or the second aspect, in some possible implementations, the indication information is sent periodically, aperiodically, or semi-permanently.

According to a third aspect, this application provides an intelligent module update method. The method may be performed by a terminal device, or may be performed by a chip, a chip system, or a circuit configured in the terminal device, or may be performed by a network device, or may be performed by a chip, a chip system, or a circuit configured in the network device. This is not limited in this application.

The method may include: obtaining to-be-updated association information of an intelligent module; and determining, based on the to-be-updated association information, update configuration corresponding to the intelligent module. It may be understood that the method may be independent of the method in the first aspect and any possible implementation of the first aspect, or the method in the second aspect and any possible implementation of the second aspect, or may be combined with the method in the first aspect and any possible implementation of the second aspect, or the method in the second aspect and any possible implementation of the second aspect.

It can be learned that, based on the foregoing technical solution, corresponding update configuration can be determined based on the to-be-updated association information of the intelligent module, so that update efficiency and reliability of the intelligent module are improved while learning performance of the intelligent module is ensured, and update costs and system resource waste are reduced.

With reference to the third aspect, in some possible implementations, the update configuration includes one or more of the following: iteration count information, update dataset information, update termination condition information, cost function design information, activation function, update indicator information, learning rate information, and update algorithm information.

With reference to the third aspect, in some possible implementations, the to-be-updated association information includes a to-be-updated volume of an intelligent module.

With reference to the third aspect, in some possible implementations, the to-be-updated association information includes indication information of the update configuration.

With reference to the third aspect, in some possible implementations, the determining, based on the to-be-updated association information, update configuration corresponding to the intelligent module includes: determining the update configuration corresponding to the intelligent module based on the to-be-updated volume. It can be learned that the update configuration is determined based on the to-be-updated volume, so that the update configuration does not need to be specially indicated, and configuration overheads can be reduced.

With reference to the third aspect, in some possible implementations, the to-be-updated volume includes one or more of the following: a quantity of to-be-updated intelligent components in the intelligent module, a proportion of the quantity of to-be-updated intelligent components in a total quantity of intelligent components in the intelligent module, a quantity of to-be-updated parameters, a proportion of the quantity of to-be-updated parameters in a total quantity of to-be-updated parameters in the intelligent module, and location information of the to-be-updated intelligent component in the intelligent module. Optionally, the parameter may include a weight value, an offset, and/or the like.

With reference to the third aspect, in some possible implementations, the determining, based on the to-be-updated association information, update configuration corresponding to the intelligent module includes: determining the update configuration corresponding to the intelligent module based on the indication information of the update configuration. It can be learned that the update configuration can be flexibly configured.

With reference to the third aspect, in some possible implementations, the obtaining to-be-updated association information of an intelligent module includes: obtaining the to-be-updated association information of the intelligent module of the local end; or receiving the to-be-updated association information of the intelligent module indicated by the peer end, and obtaining the to-be-updated association information of the intelligent module. It may be understood that, if the local end is a terminal side, the peer end is a network side; and if the local end is a network side, the peer end is a terminal side.

According to a fourth aspect, this application provides a communication apparatus, where the apparatus is configured to implement the method provided in the first aspect or the second aspect. Specifically, the apparatus may include a unit and/or a module configured to perform the method provided in the first aspect or the second aspect, for example, a processing unit and/or a communication unit.

In an implementation, the apparatus is a terminal device. When the apparatus is the terminal device, the communication unit may be a transceiver, or an input/output interface; and the processing unit may be a processor.

In another implementation, the apparatus is a chip, a chip system, or a circuit configured in the terminal device. When the apparatus is the chip, the chip system, or the circuit configured in the terminal device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

In an implementation, the apparatus is a network device. When the apparatus is the network device, the communication unit may be a transceiver, or an input/output interface; and the processing unit may be a processor.

In another implementation, the apparatus is a chip, a chip system, or a circuit configured in the network device. When the apparatus is the chip, the chip system, or the circuit configured in the network device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to a fifth aspect, this application provides a communication apparatus, where the apparatus is configured to implement the method provided in the third aspect. Specifically, the apparatus may include a unit and/or a module configured to perform the method provided in the third aspect, for example, a processing unit and/or a communication unit.

In an implementation, the apparatus is a terminal device. When the apparatus is the terminal device, the communication unit may be a transceiver, or an input/output interface; and the processing unit may be a processor.

In another implementation, the apparatus is a chip, a chip system, or a circuit configured in the terminal device. When the apparatus is the chip, the chip system, or the circuit configured in the terminal device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

In an implementation, the apparatus is a network device. When the apparatus is the network device, the communication unit may be a transceiver, or an input/output interface; and the processing unit may be a processor.

In another implementation, the apparatus is a chip, a chip system, or a circuit configured in the network device. When the apparatus is the chip, the chip system, or the circuit configured in the network device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to a sixth aspect, this application provides a processor, configured to perform the methods provided in the foregoing aspects. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is outputted by the processor, other processing may further need to be performed on the information before the information reaches the transceiver. Similarly, when the processor receives the foregoing inputted information, the transceiver receives the foregoing information, and inputs the foregoing information into the processor. Further, after the transceiver receives the foregoing information, other processing may need to be performed on the foregoing information before the information is inputted into the processor.

For example, sending the indication information mentioned in the foregoing method may be understood as that the processor outputs indication information. In another example, receiving the indication information may be understood as that the processor receives the inputted indication information.

Unless otherwise specified, or if an operation such as transmission, sending, or receiving related to the processor does not conflict with an actual function or internal logic of the processor in related descriptions, the operation may be understood as an operation such as output or input of the processor, or the processor uses a radio frequency circuit and/or an antenna to perform a transmission, sending, and/or receiving operation.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventh aspect, this application provides a processing apparatus, including a processor. The processor may be configured to execute a computer program in a memory, to implement the methods provided in the foregoing aspects. Optionally, the processing apparatus further includes a communication interface, where the processor is coupled to the communication interface, and the communication interface is configured to input and/or output information. The information includes at least one of instructions and data. Optionally, the processing apparatus further includes the memory.

In an implementation, the processing apparatus is a terminal device. When the processing apparatus is the terminal device, the communication interface may be a transceiver or an input/output interface.

In an implementation, the processing apparatus is a network device. When the processing apparatus is the network device, the communication interface may be a transceiver or an input/output interface.

In another implementation, the processing apparatus is a chip, a chip system, or a circuit. When the processing apparatus is the chip, the chip system, or the circuit, the communication interface may be an input/output interface, an interface circuit, an output circuit, an input circuit, a pin, a related circuit, or the like on the chip, the chip system, or the circuit. The processor may alternatively be embodied as a processing circuit or a logic circuit.

In another implementation, the processing apparatus is a chip, a chip system, or a circuit configured in the terminal device.

In another implementation, the processing apparatus is a chip, a chip system, or a circuit configured in the network device.

Optionally, the transceiver may be a transceiver circuit. Optionally, the input/output interface may be an input/output circuit.

According to an eighth aspect, this application provides a computer-readable storage medium, configured to storage a computer program. When the computer program is executed by a computer, the methods provided in the foregoing aspects are implemented.

According to a ninth aspect, this application provides a computer program product including instructions or a computer program. When the computer program product is run on a computer, the methods provided in the foregoing aspects are implemented.

According to a tenth aspect, a communication system is provided, and includes the foregoing network device and terminal device.

## BRIEF DESCRIPTION OF DRAWINGS

FIG. 1 is a simplified schematic diagram of a communication system that is applicable to an embodiment of this application;

FIG. 2 is a schematic diagram of a simplified structure of a communication system that is applicable to an embodiment of this application;

FIG. 3 is an example diagram of a neural network that can be used to construct an input-output correspondence model of a processing object according to this application;

FIG. 4 is a schematic diagram of a structured intelligent module according to an embodiment of this application;

FIG. 5 is an example diagram of a recursive neural network that can be used to construct an input-output correspondence model of a processing object according to this application;

FIG. 6 is a schematic diagram of a structured function of an intelligent module according to an embodiment of this application;

FIG. 7 is a schematic diagram of interaction of an intelligent component update method 700 according to an embodiment of this application;

FIG. 8 is a schematic diagram of interaction of an example of an intelligent component update method 700 according to an embodiment of this application;

FIG. 9 is a schematic diagram of interaction of another example of an intelligent component update method 700 according to an embodiment of this application;

FIG. 10 is a schematic flowchart of an intelligent module update method according to an embodiment of this application;

FIG. 11 is a schematic block diagram of a communication apparatus 1000 according to an embodiment of this application;

FIG. 12 is a schematic diagram of a structure of a terminal device 2000 according to an embodiment of this application;

and

FIG. 13 is a schematic diagram of a structure of a network device 3000 according to an embodiment of this application.

**DESCRIPTION OF EMBODIMENTS**

The following describes technical solutions of this application with reference to accompanying drawings.

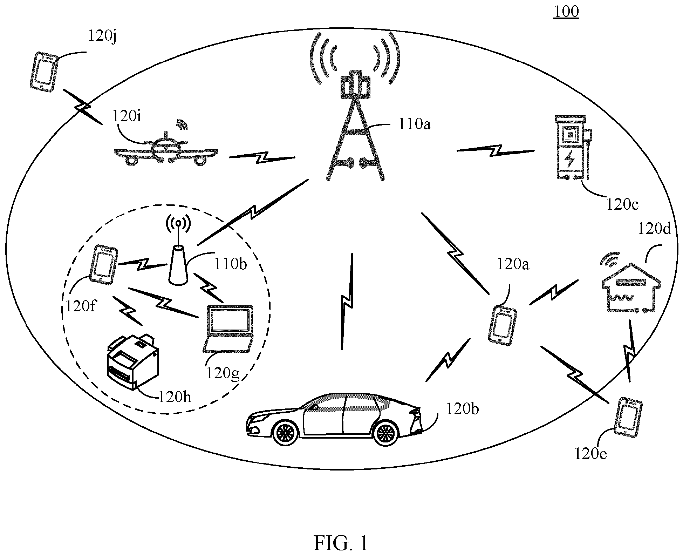

FIG. 1 is a simplified schematic diagram of a communication system applicable to an embodiment of this application and is used as an example for description, and this is not limited in this application. The communication system includes a radio access network 100. The radio access network 100 may be a next generation (such as a 6th generation (6th generation, 6G) or later) radio access network, or a conventional (such as a 5th generation (5th generation, 5G), 4th generation (4th generation, 4G), 3rd generation (3rd generation, 3G), or 2nd generation (2nd generation, 2G)) radio access network. One or more communication devices (120a to 120j, collectively referred to as 120) may be connected to each other or connected to one or more network nodes (110a and 110b, collectively referred to as 110) in the radio access network 100. Optionally, the communication system includes a core network (not shown). A radio access network device is connected to the core network in a wireless or wired manner. The core network may depend on or be independent of a radio access technology used in the radio access network 100. A core network device and the radio access network device may be independent and different physical devices, or functions of the core network device and logical functions of the radio access network device are integrated into a same physical device, or a part of functions of the core network device and a part of functions of the radio access network device are integrated into a physical device. Mutual connection between terminals and mutual connection between radio access network devices may be performed in a wired or wireless manner. Optionally, the communication system may further include another network device, for example, a radio relay device or a radio backhaul device.

One or more network nodes 110 in the radio access network 100 may be a next generation node, a legacy node, or a combination thereof. The network node is configured to communicate with the communication device and/or another network node. In this application, the network node is sometimes also referred to as a network device. A non-limiting example of the network node is a base station (base station, BS). In this application, the BS may be referenced in a broad sense using any one of various names, for example, a gNodeB/gNB, an eNodeB/eNB, a NodeB, a next generation base station in a 6G mobile communication system, a base station in a future mobile communication system, an access point in a Wi-Fi system, a base transceiver station (Base Transceiver Station, BTS), a transmission reception point (transmission reception point, TRP), a macro base station (MacroeNB, MeNB), a micro base station (PicoeNB, SeNB), a multi-standard radio (Multi-Standard Radio, MSR) wireless node, a home base station, a network controller, an access node, a wireless node, an access point (access point, AP), a transmission node, a transceiver node, a baseband unit (Base Band Unit, BBU), a remote radio unit (Remote Radio Unit, RRU), an active antenna unit (Active Antenna Unit, AAU), a remote radio head (Remote Radio Head, RRH), a central unit (centralized unit, CU), a distributed unit (distributed unit, DU), and a positioning node. The base station may be a macro base station, a micro base station, a relay node, a donor node, or the like, or a combination thereof. The base station may alternatively be an apparatus built in the foregoing device, for example, a communication module, a modem, or a chip in the foregoing device. A specific technology and a specific device form that are used by the radio access network device are not limited in embodiments of this application. The base station may support networks of a same access technology or different access technologies. For ease of description, an example in which a network node is a base station (BS) is used below for description.

The network node may be fixed or mobile. For example, the network node 110a and 110b are static, and are responsive to wireless transmission and receiving of one or more cells from the communication device 120. An aircraft (such as a helicopter or an uncrewed aerial vehicle) 120i shown in FIG. 1 may be configured to act as a mobile BS, and the one or more cells may move based on a location of the aircraft 120i. In other examples, the helicopter or the uncrewed aerial vehicle (120i) may be configured to act as the communication device for communicating with the network node 110a.

The communication device 120 is configured to connect a person, an object, a machine, and the like. The communication device 120 may be widely applied to various scenarios, such as cellular communication, device-to-device (device-to-device, D2D), vehicle to everything (vehicle to everything, V2X), peer to peer (Peer to Peer, P2P), machine to machine (Machine to Machine, M2M), machine-type communication (Machine-type Communication, MTC), Internet of Things (Internet of Things, IoT), virtual reality (virtual reality, VR), augmented reality (augmented reality, AR), industrial control, autonomous driving, remote surgery, smart grids, smart furniture, smart office, smart wearable devices, intelligent transportation, smart city, uncrewed aerial vehicles, robots, remote sensing, passive sensing, positioning, navigation and tracking, and autonomous delivery. The communication device 120 may be the following device of the 3rd Generation Partnership Project (the 3rd Generation Partnership Project, 3GPP) standard: user equipment (user equipment, UE), a fixed device, a mobile device, a handheld device, a wearable device, a terminal device, a cellular phone, a smartphone, an SIP phone, a tablet computer, a notebook computer, a computer with radio transceiver function, a smart book, a vehicle, a satellite, a global positioning system (Global Positioning System, GPS) device, a target tracking device, an aircraft (such as an uncrewed aerial vehicle, a helicopter, a multi-helicopter, a four-helicopter, or an airplane), a boat, a remote device, a smart household device, or an industrial device; or may be an apparatus disposed inside the foregoing devices (such as a communication module, a modem, or a chip in the foregoing devices). For ease of description, an example in which the communication device 120 is a terminal, a terminal device, or UE is used for description below.

In some embodiments, the UE may be configured to act as a base station. For example, the UE may act as a scheduling entity that provides a sidelink signal between UEs in a scenario such as V2X, D2D, or P2P. As shown in FIG. 1, UE 120a and UE 120b may communicate with each other through a sidelink signal. The UE 120a and the UE 120d communicate with each other without relaying a communication signal through the network node 110a.

In embodiments of this application, a function of the base station may be performed by a module (such as a chip) in the base station, or may be performed by a control subsystem including a base station function. For example, the control subsystem including a base station function may be a control center in the foregoing terminal application scenarios such as smart grids, industrial control, smart transportation, and smart city. A function of the terminal may alternatively be performed by a module (such as a chip or a modem) in the terminal, or may be performed by an apparatus including a terminal function.

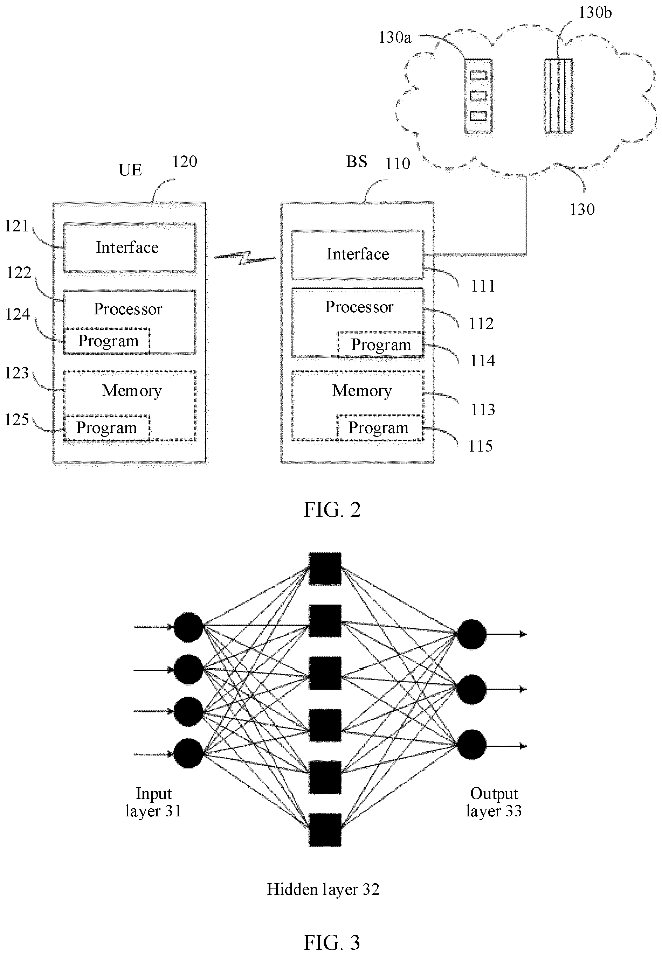

FIG. 2 is a schematic diagram of a simplified structure of a communication system and is used as an example for description, and this is not limited in this application. For simplicity, FIG. 2 only shows a network node 110 (for example, a BS 110), a communication device 120 (for example, UE 120), and a network 130. The BS 110 includes an interface 111 and a processor 112. The processor 112 may optionally store a program 114. The BS 110 may optionally include a memory 113. The memory 113 may optionally store a program 115. The UE 120 includes an interface 121 and a processor 122. The processor 122 may optionally store a program 124. The UE 120 may optionally include a memory 123. The memory 123 may optionally store a program 125. These components work together to provide functions described in the present invention. For example, the processor 112 and the interface 121 work together, to provide a wireless connection between the BS 110 and UE 220. The processor 122 and the interface 121 work together, to implement downlink transmission and/or uplink transmission of the UE 120.

The network 130 may include one or more network nodes 130a and 130b, to provide a core network function. The network nodes 130a and 130b may be next generation (such as 6G or later) core network nodes, or conventional (such as 5G, 4G, 3G, or 2G) core network nodes. For example, the networks 130a and 130b may be access and mobility management functions (Access and Mobility Management Functions, AMFs), mobility management entities (mobility management entities, MMEs), or the like. The network 130 may further include a public switched telephone network (Public Switched Telephone Network, PSTN), a packet data network, an optical network, one or more network nodes in an IP network, a wide area network (Wide Area Network, WAN), a local area network (Local Area Network, LAN), a wireless local area network (Wireless Local Area Network, WLAN), a wired network, a wireless network, a metropolitan area network, and another network, so that communication can be performed between UEs 120 and/or BSs 110.

A processor (such as the processor 112 and/or the processor 122) may include one or more processors and is implemented as a combination of computing devices. The processor (such as the processor 112 and/or the processor 122) may separately include one or more of the following: a microprocessor, a microcontroller, a digital signal processor (digital signal processor, DSP), a digital signal processing device (digital signal processing device, DSPD), an application-specific integrated circuit (application specific integrated circuit, ASIC), a field programmable gate array (field programmable gate array, FPGA), a programmable logic device (programmable logic device, PLD), gating logic, transistor logic, a discrete hardware circuit, a processing circuit, or other proper hardware, firmware, and/or a combination of hardware and software, to perform various functions described in this disclosure. The processor (such as the memory 112 and/or the memory 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the BS 110 and/or the UE 120 to perform a software program and process data in the software program.

An interface (for example, the interface 111 and/or 121) may include a device configured to communicate with one or more computers (for example, in some embodiments, the interface may include a wire for coupling a wired connection or a terminal and/or a pin for wireless connection for coupling a wireless transceiver). In some embodiments, the interface may include a transmitter, a receiver, a transceiver, and/or an antenna. The interface may be configured to use any available protocol (such as the 3GPP standard) for communication between computer devices (such as the UEs, the BSs, and/or network nodes).

A program in this application represents software in a broad sense. A non-limiting example of the software includes program code, a program, a subprogram, instructions, an instruction set, code, a code segment, a software module, an application program, a software application program, or the like. The program may be run in a processor and/or a computer. Therefore, the BS 110 and/or the UE 120 perform the functions and/or processes described in the present invention.

A memory (such as the memory 113 and/or the memory 123) may store data required by the processors 112 and 122 to execute software. The memories 113 and 123 may be implemented using any proper storage technology.

For example, the memory may be any available storage medium that can be accessed by the processor and/or the computer. Non-limiting examples of storage media include: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a removable medium, a compact disc memory, a magnetic disk storage medium, a magnetic storage device, a flash memory, a register, a state memory, a remotely mounted memory, a local or remote memory component, or any other medium that can carry or store software, data, or information and can be accessed by a processor/computer.

The memory (such as the memory 113 and/or the memory 123) and the processor (such as the processor 112 and/or the processor 122) may be separately disposed or integrated. The memory may be configured to be connected to the processor, so that the processor can read information from the memory, and store and/or write information into the memory. The memory 113 may be integrated into the processor 112. The memory 123 may be integrated into the processor 122. The memory (such as the memory 113 and/or the memory 123) and the processor (such as the processor 112 and/or the processor 122) may be disposed in an integrated circuit (for example, the integrated circuit may be disposed in the UE, the BS, or another network node).

According to some embodiments, various functions described in the present invention may be implemented by an apparatus (such as the UE, the BS, and/or any network node), which includes one or more modules, components, circuits, software, elements, and the like (collectively referred to as elements) configured to perform various functions. The elements may be implemented by hardware, software, firmware, and/or a combination thereof.

For ease of understanding embodiments of this application, several terms related to this application are first described below.

1. An intelligent module may be referred to as a model, a black box, or an intelligent network. This is not limited in this application. The intelligent module may be implemented in a combination manner through one or more of neural networks, such as a perceptron, a convolutional neural network, a recursive neural network, a cyclic neural network, a long and short memory network, a Hopfield network, and a deep automatic encoder of a Boltzmann machine network, constructed by an architecture such as a feedforward neural network, a cyclic network, or a symmetric connection network. The intelligent module may alternatively be implemented through a non-neural network, such as a decision tree or a deep forest network. By constructing and training the intelligent module, a network with a structure and a parameter can be formed to approximate or fit any linear or nonlinear function with specific precision. In a communication network, different intelligent modules may be constructed and trained based on different processing objects. The different processing objects may be, for example, channel state information (channel state information, CSI) processing, encoding/decoding processing, modulation/demodulation processing, channel estimation processing, and data detection processing. In this way, there may be an intelligent module corresponding to CSI processing, an intelligent module corresponding to encoding/decoding processing, an intelligent module corresponding to modulation/demodulation processing, an intelligent module corresponding to channel estimation processing, and an intelligent module corresponding to data detection processing. One processing object may correspond to one or more intelligent modules. A terminal side and a network side may have respective corresponding intelligent modules, or the terminal side and the network side may have a common intelligent module.

An example in which an intelligent module is implemented through a neural network is used. FIG. 3 is an example diagram of a neural network that can be used to construct an input-output correspondence model of a processing object in this application. The neural network is divided into three layers: an input layer 31, a hidden layer 32, and an output layer 33. Each layer has a specific quantity of neurons, which are nodes. In the model, the example shows that the input layer 31 has four neurons, the hidden layer 32 has six neurons, and the output layer 33 has three neurons. During training, training is performed based on training configuration (for example, a training dataset), four corresponding inputs, and three corresponding outputs with reference to three known outputs. During communication processing, four inputs of a corresponding processing object are obtained through the trained model, and the four inputs are inputted into the trained intelligent module, to finally obtain three corresponding outputs, so as to implement related processing. The model is merely an example. In an available model in this application, the input layer is not limited to four input neurons, and the hidden layer may have more than one layer, and is not limited to six neurons. In addition, the output layer neurons may adjust a quantity of output neurons based on different outputs to be obtained.

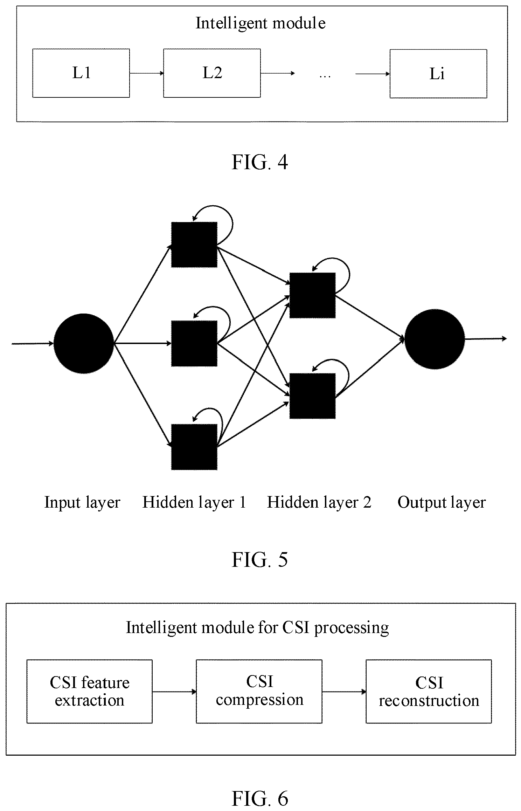

2. An intelligent component may also be referred to as an intelligent subnetwork, an intelligent layer, an intelligent layer group, an intelligent member, or the like. This is not limited in this application. An intelligent component is a structured composition of the intelligent module provided in this application, and is a part of the intelligent module. One intelligent module includes at least two intelligent components. FIG. 4 is a schematic diagram of a structured intelligent module according to an embodiment of this application. The intelligent module is structured, and includes intelligent components L1 to Li (i is greater than 1). It may be understood that one intelligent component may further be subdivided, for example, may include two or more subcomponents. Intelligent components may be logically defined, not necessarily absolute division. Intelligent components may be defined based on all or a part of the layers in the intelligent module. For example, one layer may correspond to one intelligent component, or a plurality of layers may correspond to one intelligent component. For example, an intelligent module is implemented through a recursive neural network. FIG. 5 is an example diagram of a neural network that can be used to construct an input-output correspondence model of a processing object in this application. The recursive neural network is divided into four layers, and has two hidden layers: a hidden layer 1 and a hidden layer 2. In the neural network, output of a neuron may directly apply to the neuron at a next moment. To be specific, input for a neuron at an $i^{th}$ layer at a moment m includes output of a neuron at an (i-1)$^{th}$ layer at the moment, and further includes output of the neuron at a moment (m-1). The operation is shown using a semicircular arrow. In this way, the hidden layer 1 may be used as an intelligent component, and the hidden layer 2 may be used as an intelligent component. Optionally, the hidden layer 1 and the hidden layer 2 may be jointly used as an intelligent component, or each of the input layer and the output layer are used as an intelligent component. Intelligent components may be defined based on different functions in the intelligent module. For example, the intelligent module is an intelligent module for CSI processing. FIG. 6 is a schematic diagram of a structured function of an intelligent module according to an embodiment of this application. The intelligent module may be divided into an intelligent component for CSI feature extraction, an intelligent component for CSI compression, and an intelligent component for CSI reconstruction.

The foregoing is merely an example. In this application, the intelligent component may be defined based on another principle, for example, the intelligent component is defined based on a scenario or a requirement. All technical solutions that can divide the intelligent module fall within the scope of this application.

3. Update of an intelligent component includes one or more of the following operations in this application: intelligent component training, intelligent component adding, intelligent component deleting, intelligent component enabling, and intelligent component disabling. The intelligent component training may be understood as training and optimizing an intelligent component based on a training parameter. The intelligent component adding may be understood as adding an intelligent component to an intelligent module. The intelligent component deleting may be understood as deleting an intelligent component from an intelligent module. The intelligent component enabling may be understood as that an intelligent component is started for use or is activated. The intelligent component disabling may be understood as that an intelligent component is stopped using or is deactivated. It should be understood that the update of an intelligent component includes at least one of the foregoing operations, that is, there may be a plurality of operations. For example, the update of an intelligent component may be first adding an intelligent component and then training the intelligent component; or first enabling an intelligent component and then training the intelligent component.

It may be understood that the update is not limited to being performed after early training construction is performed on the intelligent module, that is, the update is not after the intelligent module is initialized. The update may be performed before the early training construction is performed on the intelligent module, or may be performed during construction, or may be performed after construction.

4. An update parameter is a parameter for updating the intelligent module, and related information of the update parameter is update parameter information. The update parameter information may include hyperparameter information, gradient information, feedforward information, and the like. The hyperparameter information may be referred to as hyperparameter information, and is a parameter designed before the intelligent component starts to be updated, or may be optimized and adjusted during update. The gradient information is a direction in which a function increases or decreases fastest at a point. The feedforward information is information that is transmitted forward by each layer of the intelligent module.

5. An intelligent module parameter mainly includes a weight value (or referred to as a weight) and/or an offset (or referred to as a threshold) of an intelligent component in the intelligent module. The weight value may have different forms as different intelligent module (for example, different neural network models), for example, may be a convolution kernel corresponding to a convolutional neural network. The offset is for measuring difficulty of generating excitation by a neuron.

6. An update configuration is a related configuration for updating the intelligent module, and may include: iteration count information, update dataset information, update termination condition information, cost/loss function design information, activation function, update indicator information, learning rate information, update algorithm information, and the like. The iteration count information includes an update count or iteration count of the intelligent component in the intelligent module required for ending the update. The update dataset information includes a size and/or distribution information of the update dataset, which is for convergence of the structure and/or the parameter of the intelligent module. The update termination condition information includes information, other than the iteration count, for enabling network update to stop, for example, a predetermined threshold of an update indicator. The cost/loss function design information indicates a form of a cost/loss function used when an intelligent component in the intelligent module is updated, and is for determining a degree of proximity between an output quantity and an expected quantity of the intelligent module. The activation function is a non-linear function used by an output of each neuron in the intelligent module. The update indicator information is a performance indicator for determining a degree of proximity between an output quantity and an expected quantity of the intelligent module during update of the intelligent module, such as entropy and a mean square error. The learning rate information indicates a parameter update speed in each step of training, that is, includes amplitude or step information of each update. The update algorithm information includes a learning algorithm for updating the intelligent module. In this application, "indicate" may include "directly indicate" and "indirectly indicate". When a piece of indication information is described as indicating A, it may be understood that the indication information carries A, directly indicates A, or indirectly indicates A.

In this application, information indicated by the indication information is referred to as to-be-indicated information. During specific implementation, the to-be-indicated information may be indicated in many manners, for example, but not limited to, the to-be-indicated information such as the to-be-indicated information or an index of the to-be-indicated information may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated in an arrangement sequence of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined based on a protocol, or may be configured by a transmitting end device by sending configuration information to a receiving end device. The configuration information may include, for example, but is not limited to, one or a combination of at least two of radio resource control signaling, Media Access Control (Media Access Control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, downlink control information (downlink control information, DCI).

In this application, "first", "second", and various numerical numbers are merely used to distinguish between objects for ease of description, but are not intended to limit the scope of embodiments of this application. For example, the objects indicated by "first" and "second" may be a same object. Technical features described by the "first" and "second" have no sequence or order of magnitude. "Store" in embodiments of this application may be storage in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

The "protocol" involved in embodiments of this application may refer to standard protocols in the communication field, such as an LTE protocol, an NR protocol, a WLAN protocol, a next-generation protocol, and a related protocol in other communication systems. This is not limited in this application.

In this application, a quantity of nouns, unless otherwise specified, means "singular nouns or plural nouns", that is, "one or more". "At least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. A character "/" generally represents an "or" relationship between the associated objects. "At least one of the following items (pieces)" or a similar expression thereof refers to any combination of these items, including any combination of singular items (pieces) or plural items (pieces). For example, at least one of a, b, and c may represent: a, b, c, a and b, a and c, b and c, or a, b, and c, where a, b, and c each may be singular or plural.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Application of the AI technology in a communication system can make the communication system more intelligent and significantly improve the communication processing efficiency. To ensure performance of a communication system, construction and training of an intelligent module corresponding to a processing object are particularly important. However, a communication system involves various complex scenarios, and generates a large amount of communication data, mobile data, and the like. In addition, some inherent features of the AI technology pose a challenge to the application of the AI technology in the communication system. For example, an intelligent module is implemented through a deep learning network. An inherent characteristic of the deep learning network includes at least that learning performance or problem complexity is in a direct proportion to a complexity degree (for example, a depth and a width) of a deep learning network structure, and a training dataset required to ensure reliable convergence is closely related to a quantity of parameters of the deep learning network. For example, a deeper deep learning network requires a larger dataset. Therefore, to ensure the performance of the intelligent module, the complexity and processing workload of update of the intelligent module are relatively large. If an intelligent module needs to be updated as a whole for a new feature each time, processing overhead is correspondingly high, update efficiency is low, and system resources are wasted. In view of this, this application provides a design of an intelligent component, and a to-be-updated indication is performed on one or more intelligent components in an intelligent module, so that update efficiency and reliability of the intelligent module are improved while learning performance of the intelligent module is ensured, and update costs and system resource waste are reduced. Embodiments provided in this application are described below in detail with reference to the accompanying drawings. The following embodiments are described mainly using the system shown in FIG. 1 and FIG. 2 as an example, but are not limited thereto.

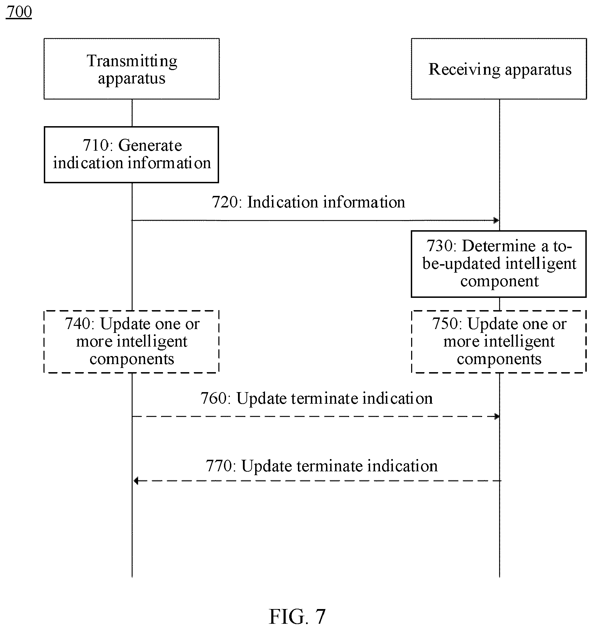

FIG. 7 is a schematic diagram of interaction of an intelligent component update method 700 according to an embodiment of this application. The method 700 is applied to a system including a transmitting apparatus and a receiving apparatus. The transmitting apparatus and the receiving apparatus in this embodiment are relative to each other. For example, the transmitting apparatus may be a network node 110 (for example, the BS 110) or a communication device 120 (for example, the UE 120) in a communication system. The receiving apparatus may be a terminal 120 or the BS 110.

710: The transmitting apparatus generates indication information.

The indication information indicates at least one of the following: one or more intelligent components to be updated at a local end, where the one or more intelligent components belong to a first intelligent module, and one or more intelligent components to be updated at a peer end, where the one or more intelligent components belong to a second intelligent module.

In some implementations, the indication information of the to-be-updated intelligent component is generated by a network side. In some other implementations, the indication information of the to-be-updated intelligent component is generated by a terminal side. In this application, roles of the local end and the peer end are relative to each other. For example, the local end and the peer end may be defined based on a transmitting end and a receiving end of the indication information. If the local end is the transmitting apparatus, the peer end is the receiving apparatus. If the local end is the terminal side, the peer end is the network side. If the local end is the network side, the peer end is the terminal side. The to-be-updated intelligent component may be on the terminal side, the network side, or the terminal side and the network side.

The indication information may indicate an intelligent component to be updated at the local end, or may indicate an intelligent component to be updated at the peer end. That is, the indication information may notify the peer end of the intelligent component to be updated on the transmitting apparatus side, or may notify the peer end of the intelligent component to be updated at the peer end. If the indication information indicates only the intelligent component to be updated at the local end, the peer end may determine the intelligent component to be updated on the transmitting apparatus side. The peer end may alternatively determine the intelligent component to be updated on the receiving apparatus side, based on the indicated intelligent component to be updated on the transmitting apparatus side and an association relationship between intelligent components or a relationship predefined or preconfigured in a protocol. It may be understood that, if the indication information indicates only the intelligent component to be updated at the peer end, the peer end may determine the intelligent component to be updated on the receiving apparatus side. The peer end may alternatively determine the intelligent component to be updated on the transmitting apparatus side, based on the indicated intelligent component to be updated on the receiving apparatus side and an association relationship between intelligent components or a relationship predefined or preconfigured in a protocol.

Optionally, the indication information may be a direct indication, an indirect indication, an explicit indication, or an implicit indication. In an implementation, the indication information may carry at least one piece of the following information: information about the to-be-updated intelligent component or a non-to-be-updated intelligent component in the first intelligent module, or information about the to-be-updated intelligent component or a non-to-be-updated intelligent component in the second intelligent module. It may be understood that the indication information may carry information about the to-be-updated intelligent component, and indicates the to-be-updated intelligent component. Optionally, the indication information carries information about the non-to-be-updated intelligent component, which is equivalent to indirectly or implicitly indicating information about the to-be-updated intelligent component. The receiving end of the indication information may determine that intelligent components in the intelligent module other than the non-to-be-updated intelligent component are to-be-updated intelligent components. The information about the to-be-updated or the non-to-be-updated intelligent component may be an identifier (ID) or an index (index) of the intelligent component, or association information of the intelligent component, for example, offset information (such as an index difference and a position offset) of the intelligent component relative to a start intelligent component in the intelligent module, and for example, a position boundary of the intelligent component in the intelligent module. Optionally, the information may alternatively be other information bound to the intelligent component (for example, processing information of a function corresponding to the intelligent component, for example, indicating an update of a compression rate, which is equivalent to implicitly indicating an update of an intelligent component corresponding to compression processing, and for example, indicating an update of a communication environment, which is equivalent to implicitly indicating that a function or some functions corresponding to the communication environment need to be updated, and an intelligent component corresponding to the function is to be updated).

In some implementations, the indication information may perform indication in a form of a bitmap (bitmap). For example, one or more bits correspond to one intelligent component. For example, when a value of a bit is 1, it indicates that an intelligent component corresponding to the bit is a to-be-updated intelligent component; and when a value of a bit is 0, it indicates that an intelligent component corresponding to the bit is a non-to-be-updated intelligent component. In some manners, different intelligent component groups may be indicated by status values to implement indication of the indication information. For example, assuming that an intelligent module includes six intelligent components, a status value "00" indicates to-be-updated intelligent components whose indexes are 0 and 1 (the first two intelligent components), a status value "01" indicates to-be-updated intelligent components whose indexes are 2 and 3 (the middle two intelligent components), and a status value "10" indicates to-be-updated intelligent components whose indexes are 4 and 5 (the last two intelligent components). In some implementations, different status values may indicate different intelligent component indexes to implement indication of the indication information. For example, a status value "000" indicates a to-be-updated intelligent component whose index is 0, a status value "001" indicates a to-be-updated intelligent component whose index is 1, and a status value "010" indicates a to-be-updated intelligent component whose index is 2. It may be understood that, if the indication is performed by indicating the offset information of the intelligent component relative to the start intelligent component, the offset information may also be indicated in a manner such as through the status value. Optionally, the position boundary of the intelligent component in the intelligent module may also be indicated based on these indication manners. If the intelligent components are continuous in the intelligent module, the first and last intelligent components may be indicated. For example, (1,3) indicates intelligent components whose index or position index are 1 to 3 in the intelligent module. A start position or an end position of the intelligent components in the intelligent module may be indicated. For example, assuming that there are four intelligent components in the intelligent module that respectively correspond to position indexes 0 to 3. In this case, when the position index "2" is indicated, if the position index is used as the start position, it is equivalent to indicating the intelligent components whose location indexes are 2 and 3; or if the position index is used as the end location, it is equivalent to indicating the intelligent components whose location indexes are 0 to 2.

The indication information may be generated before the intelligent module is constructed, or may be generated during construction or after the intelligent module is constructed.

The indication information may be generated based on one or more factors, for example, a change of the communication environment, a change of processing corresponding to some functions (for example, a change of an extraction rate or a compression rate), or generated by the network device or the terminal device based on a requirement. This is not limited in this application. A change of the communication environment is used as an example. For example, a change of multipath latency distribution causes update of some intelligent components corresponding to a latency information feature. Therefore, indication information is generated based on this. In this case, an indication in the indication information and division of an intelligent module into intelligent components can support at least independent update of the intelligent components. A typical example of a change of multipath delay distribution is that a user terminal is switched from an open area to a building-intensive area. A change of the communication environment, for example, a change of Doppler distribution, causes update of some intelligent components corresponding to a Doppler information feature. Therefore, indication information is generated based on this. In this case, an indication in the indication information and division of an intelligent module into intelligent components can support at least independent update of the intelligent components. In another example, a typical example of a Doppler distribution change is that the user terminal is switched from a low-speed movement scenario to a high-speed movement scenario. For a change of a communication environment corresponding to angle distribution, indication information is generated based on this. In this case, an indication in the indication information and division of an intelligent module into intelligent components can support at least independent update of the intelligent components that implement angle information processing.

In another implementation, the indication information may be generated based on factors such as a user service type and a transmission performance requirement. For example, a user performs different services such as an SMS message, a voice, and a video. The indication information needs to indicate a corresponding intelligent component to be updated based on different services of the terminal device and different data processing performance requirements of the terminal device. In an implementation, the transmitting apparatus is a network side apparatus (for example, a base station), the receiving apparatus is a terminal side apparatus (for example, a terminal), and the indication information may be generated based on capability information reported by the terminal. If the capability information reported by the terminal indicates that update of an intelligent module, an intelligent component, or some intelligent components is supported, the indication information is generated based on the reported capability information, where the indication information may indicate update of the intelligent component of the terminal. If the capability information reported by the terminal indicates that the foregoing update is not supported, the indication information is generated based on the reported capability information. The indication information does not indicate an update of an intelligent component of the terminal, and may indicate an update of an intelligent component of the base station, or the indication information is not generated. Optionally, the first intelligent module and the second intelligent module are a same intelligent module. It may be understood that, for a processing object, the network side and the terminal side share an intelligent module, that is, there is a common intelligent module.

Optionally, the first intelligent module is an intelligent module of the local end, and the second intelligent module is an intelligent module of the peer end. It may be understood that, for a processing object, the network side and the terminal side have respective corresponding intelligent modules.

It can be learned that the local end and the peer end may share an intelligent module, or an intelligent module may be disposed at each of the local end and the peer end. In this way, flexibility of applying the AI technology to a communication network can be improved, and the intelligent module can be flexibly disposed based on a situation of the communication system.

Optionally, the indication information further indicates an update request. The indication information may directly indicate, indirectly indicate, explicitly indicate, or implicitly indicate the update request. For example, the indication information may implicitly indicate the update request by indicating the to-be-updated intelligent component, that is, indicate the to-be-updated intelligent component to the receiving end, which means that an update is requested.

720: The transmitting apparatus sends the indication information to the receiving apparatus. Correspondingly, the receiving apparatus receives the indication information.

Optionally, the indication information may be sent periodically, aperiodically, or semi-permanently. Optionally, the indication information may be sent based on at least one of the following signaling: RRC, MAC CE, and DCI. The indication information may be sent based on one piece of signaling or a plurality of pieces of signaling. For example, different to-be-updated intelligent components are indicated by the plurality of pieces of signaling respectively. Alternatively, if the update request is further indicated, the update request may be separately sent based on signaling other than signaling indicating the to-be-updated intelligent component, or may be sent together with signaling indicating the to-be-updated intelligent component. This is not limited in this application. The indication information may be sent before the intelligent module is constructed, or may be sent during construction or after the intelligent module is constructed, based on a processing phase for which an update operation is performed.

730: The receiving apparatus determines a to-be-updated intelligent component.

Based on the indication of the indication information, the receiving apparatus may determine a to-be-updated intelligent component thereof, or may determine an intelligent component to be updated on the transmitting apparatus side.

Optionally, the update includes at least one of the following operations: intelligent component training, intelligent component adding, intelligent component deleting, intelligent component enabling, and intelligent component disabling. The following may be understood.

The intelligent component training may be understood as training and/or optimizing an intelligent component based on a training parameter. An intelligent module corresponding to the CSI compression processing is used as an example. It is assumed that the receiving end and the transmitting end share an intelligent module, which includes four intelligent components: a transmitting intelligent component 1, a transmitting intelligent component 2, a receiving intelligent component 1, and a receiving intelligent component 2. The receiving end and the transmitting end may be separately divided based on processing functions. The transmitting intelligent component 1 is configured for CSI feature extraction, the transmitting intelligent component 2 is configured for CSI feature compression, the receiving intelligent component 1 is configured for CSI feature restoration, and the receiving intelligent component 2 is configured for CSI feature decompression. For example, when the compression rate is adjusted, for example, when the compression rate is updated from 0.5 to 0.25, based on the indication information (for example, the to-be-trained intelligent component may be explicitly indicated, or the to-be-trained intelligent component is implicitly indicated by indicating the update of the compression rate), the intelligent module trains the transmitting intelligent component 2 and the receiving intelligent component 2, but does not train the transmitting intelligent component 1 and the receiving intelligent component 1, that is, corresponding intelligent module parameters remain unchanged. In another example, when the compression rate remains unchanged and the communication environment changes, based on the indication information (for example, the to-be-trained intelligent component may be explicitly indicated, or the to-be-trained intelligent component is implicitly indicated by indicating the update of the communication environment), it is assumed that the intelligent component corresponding to the CSI feature processing needs to be trained. In this case, the intelligent module trains the transmitting intelligent component 1 and the receiving intelligent component 1, but does not train the transmitting intelligent component 2 and the receiving intelligent component 2, that is, corresponding intelligent module parameters remain unchanged.

The intelligent component adding may be understood as adding an intelligent component to an intelligent module. The intelligent module corresponding to the CSI compression processing is still used as an example. It is assumed that the receiving end and the transmitting end share an intelligent module, which includes four intelligent components: a transmitting intelligent component 1, a transmitting intelligent component 2, a receiving intelligent component 1, and a receiving intelligent component 2. The receiving end and the transmitting end may be separately divided based on processing functions. The transmitting intelligent component 1 is configured for CSI feature extraction, the transmitting intelligent component 2 is configured for CSI feature compression, the receiving intelligent component 1 is configured for CSI feature restoration, and the receiving intelligent component 2 is configured for CSI feature decompression. For example, when the compression ratio is adjusted, for example, when the compression ratio is updated from 0.5 to 0.25, based on the indication information (for example, a to-be-added intelligent component may be explicitly indicated, or a to-be-added intelligent component is implicitly indicated by indicating the update of the compression ratio), both the intelligent component 1 and the intelligent component 2 of the receiving end and the transmitting end in the intelligent module remain unchanged, and intelligent components 3 of the receiving end and the transmitting end are added to the intelligent module. Optionally, the intelligent components 3 of the receiving end and the transmitting end may be designed based on the intelligent components 2 of the receiving end and the transmitting end respectively. For example, when both the intelligent components 3 and the intelligent components 2 implement 0.5 times compression, the intelligent components 3 may reuse a structure of the intelligent components 2.

The intelligent component deleting may be understood as deleting an intelligent component from an intelligent module. The intelligent module corresponding to CSI compression processing is still used as an example. It is assumed that the receiving end and the transmitting end share an intelligent module, which includes six intelligent components: a transmitting intelligent component 1, a transmitting intelligent component 2, a transmitting intelligent component 3, a receiving intelligent component 1, a receiving intelligent component 2, and a receiving intelligent component 3. The receiving end and the transmitting end may be separately divided based on processing functions. The transmitting intelligent component 1 is configured for CSI feature extraction, the transmitting intelligent component 2 is configured for CSI feature low-dimensional compression, the transmitting intelligent component 3 is configured for CSI feature high-dimensional compression, the receiving intelligent component 1 is configured for CSI feature restoration, the receiving intelligent component 2 is configured for CSI feature low-dimensional decompression, and the receiving intelligent component 3 is configured for CSI feature high-dimensional decompression. For example, when the compression ratio is adjusted, for example, when the compression ratio is updated from 0.25 to 0.5, based on the indication information (for example, a to-be-deleted intelligent component may be explicitly indicated, or a to-be-deleted intelligent component is implicitly indicated by indicating the update of the compression ratio), both the intelligent components 1 and the intelligent components 2 of the receiving end and the transmitting end in the intelligent module remain unchanged, and the intelligent components 3 of the receiving end and the transmitting end in the intelligent module are deleted.

The intelligent component enabling means that the intelligent component is started for use or activated. The intelligent component disabling means that the intelligent component is stopped using or deactivated. The intelligent module corresponding to the CSI compression processing is still used as an example. It is assumed that the receiving end and the transmitting end share an intelligent module, which includes four intelligent components: a transmitting intelligent component 1, a transmitting intelligent component 2, a receiving intelligent component 1, and a receiving intelligent component 2. The receiving end and the transmitting end may be separately divided based on processing functions. The transmitting intelligent component 1 is configured for CSI feature extraction, the transmitting intelligent component 2 is configured for CSI feature compression, the receiving intelligent component 1 is configured for CSI feature restoration, and the receiving intelligent component 2 is configured for CSI feature decompression. The intelligent components 2 of the transmitting end and the receiving end may be subdivided into intelligent subcomponents 2.1, 2.2, and 2.3 based on different compression rates, so as to implement, for example, a compression rate of 0.5 (using 2.1), 0.25 (using 2.1 and 2.2), or 0.125 (using 2.1, 2.2, and 2.3). When the compression ratio gradually decreases, before the 2.1, 2.2, and 2.3 are activated in sequence based on the indication information (for example, a to-be-activated intelligent component may be explicitly indicated, or a to-be-activated intelligent component is implicitly indicated by indicating the update of the compression ratio), the corresponding subcomponents are in an inactive state. Alternatively, in another implementation, a plurality of intelligent subcomponents exist in a parallel form instead of the foregoing serial form. In this case, different subcomponents respectively correspond to different compression rates. In actual implementation, a corresponding subcomponent is selected based on a compression rate requirement. The process of stopping using or deactivating an intelligent component is the reverse. It should be understood that the indication information may indicate the to-be-updated intelligent component in a subcomponent dimension, or may indicate the to-be-updated intelligent component in an upper-level dimension of the subcomponent. The subcomponent herein is merely used for description differentiation, and is not a conceptual difference from the intelligent component. It may be understood that the subcomponent may also be a concept of the intelligent component defined in this application.

It should be understood that the update includes at least one of the foregoing operations, that is, there may be a plurality of operations. For example, the update may be: adding an intelligent component first, and then training the intelligent component; or enabling the intelligent component first, and then training the intelligent component.

It may be understood that the update is not limited to being performed after early training construction is performed on the intelligent module, that is, the update is not after the intelligent module is initialized. The update may be performed before the early training construction is performed on the intelligent module, or may be performed during construction, or may be performed after construction.

The intelligent module corresponding to CSI compression processing is still used as an example. The definitions of the intelligent components 1 of the transmitting end and the receiving end are the same as those described above. For the intelligent components 2 of the transmitting end and the receiving end, the subcomponents 2.1, 2.2, and 2.3 corresponding to different compression rates may be trained before or at the same time of the early training and construction of the intelligent module. In actual operation, an adding operation, a deleting operation, an activating operation, or a deactivating operation may be determined in a cascade manner (parallel or serial connection) of these subcomponents.

Similarly, the intelligent component may be updated after the intelligent module is constructed through early training. The update includes updating a parameter such as a weight and/or a threshold of a newly added intelligent component or an original intelligent component. This is not limited in this application.

It should be understood that the foregoing example is an update of an intelligent component corresponding to a case in which a compression rate changes, and the foregoing update operation should be applicable to any component or subcomponent in any intelligent module. For example, when the scenario changes, an object of the update operation may be the intelligent components 1 of the receiving end and the transmitting end.

740: The transmitting apparatus updates the one or more intelligent components that are on the transmitting apparatus side.

740 is an optional step. The to-be-updated intelligent component of the indication information is on the transmitting apparatus side, and the transmitting apparatus may subsequently update the corresponding intelligent component. The intelligent component may be updated based on update parameter information. The update parameter information may be obtained from the receiving apparatus side, or may be obtained from the local end, or may be partially obtained from the receiving apparatus side and then partially obtained from the local end. It may be understood that an update parameter can be obtained in different manners, so that richness of a parameter source can be ensured. Optionally, the update of the intelligent component includes: keeping an intelligent module parameter (for example, a weight value (or a weight) and/or an offset (or a threshold) of an intelligent component in the intelligent module) corresponding to a non-to-be-updated intelligent component in the first intelligent module unchanged (that is, freezing a weight value (or a weight) and/or an offset (or a threshold) of the non-to-be-updated intelligent component); and updating an intelligent module parameter of the one or more intelligent components based on the update parameter information. It may be understood that, for a non-to-be-updated intelligent component, an intelligent module parameter of the non-to-be-updated intelligent component remain unchanged, so that update costs can be effectively reduced, and a system resource can be saved.

750: The receiving apparatus updates the one or more intelligent components that are on the receiving apparatus side.

750 is an optional step. The to-be-updated intelligent component of the indication information is on the receiving apparatus side, the receiving apparatus may subsequently update the corresponding intelligent component. The intelligent component may be updated based on update parameter information. The update parameter information may be obtained from the transmitting apparatus side, or may be obtained from the local end. Optionally, the update of the intelligent component includes: keeping an intelligent module parameter (for example, a weight value (or a weight) and/or an offset (or a threshold) of the intelligent component in the intelligent module) corresponding to a non-to-be-updated intelligent component in the second intelligent module unchanged (that is, freezing a weight value (or a weight) and/or an offset (or a threshold) of the non-to-be-updated intelligent component); and updating an intelligent module parameter of the one or more intelligent components based on the update parameter information.

It may be understood that there is no absolute sequence between 740 and 750. In 740 and 750, the update operation may be started immediately after the indication information is received, or may be started a preset period of time (for example, several time units) after the indication information is received, or may be started through triggering of an instruction, for example, the instruction indicating the update request, or another instruction. Optionally, the update of the intelligent component may be in an online mode (for example, update of the intelligent component is completed during real-time communication between the transmitting end and the receiving end, including a learning process and an inference process), or in an offline mode (for example, an inference process of the intelligent component is implemented during real-time communication, and a learning process of the intelligent component is completed before real-time communication). The update parameter information may be feedforward information, hyperparameter information, gradient information, or the like. The intelligent module parameter may be a weight value (or referred to as a weight) and/or an offset (or referred to as a threshold) of the intelligent module.

760: The transmitting apparatus sends an update terminate indication to the receiving apparatus.

760 is an optional step. The update termination may be triggered when the update is completed or a predetermined condition is satisfied (for example, an update periodicity reaches a predetermined quantity of iterations or the update duration reaches a predetermined threshold), with no need to send the update terminate indication does not need to be sent. Optionally, the transmitting apparatus sends the update terminate indication to the receiving apparatus, and correspondingly, the receiving apparatus receives the update terminate indication. Optionally, when the predetermined condition is satisfied, for example, a module indicator such as a mean square error or entropy information reaches a threshold, the transmitting end may indicate that the update is terminated.

770: The receiving apparatus sends the update terminate indication to the transmitting apparatus. 770 is an optional step. The update termination may be triggered when the update is completed or a predetermined condition is satisfied (for example, an update periodicity reaches a predetermined quantity of iterations or the update duration reaches a predetermined threshold), with no need to send the update terminate indication. Optionally, the receiving apparatus sends the update terminate indication to the transmitting apparatus, and correspondingly, the transmitting apparatus receives the update terminate indication. When the predetermined condition is satisfied, for example, a module indicator such as a mean square error or entropy information reaches a threshold, the receiving end may indicate that the update is terminated.

It may be understood that there is no absolute sequence between 760 and 770. It may be understood that, sending of the update terminate indication, for example, the update terminate indication may be triggered under a specific condition, ensures effective control and saving of system resources. Optionally, for the foregoing optional steps 740 to 770, when the receiving apparatus does not support the update, after 730, the receiving apparatus may send a reject message to the transmitting apparatus. Therefore, steps 740 to 770 are not performed, or at least 750 and 770 are not performed. When the receiving apparatus supports the update, after 730, the receiving apparatus may send an acknowledgment message to the transmitting apparatus. Therefore, steps 740 to 770 may be performed.

According to embodiments of this application, the to-be-updated indication can be performed for the one or more intelligent components in the intelligent module, so that update efficiency and reliability of the intelligent module are improved while learning performance of the intelligent module is ensured, and update costs and system resource waste are reduced.

An example in which the transmitting apparatus is the terminal device is used for describing a possible implementation of this embodiment of the present invention below.

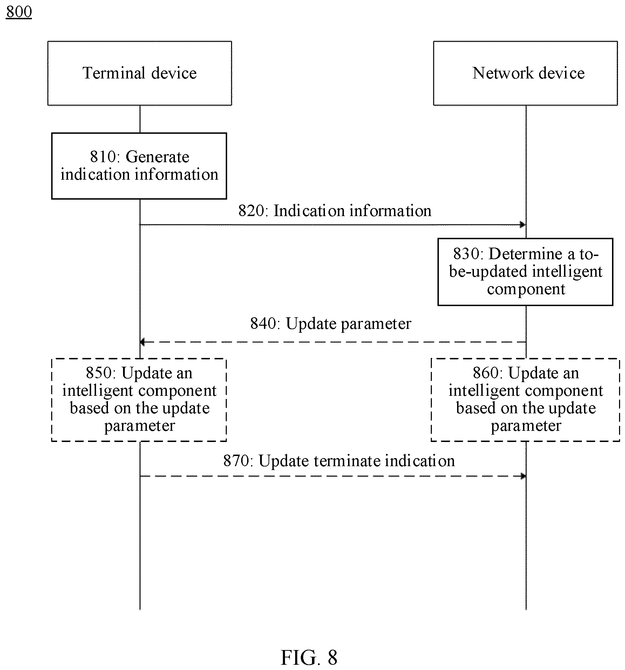

FIG. 8 is a schematic diagram of interaction of an example of an intelligent component update method 700 according to an embodiment of this application. A difference between this embodiment and the embodiment shown in FIG. 7 lies in that this embodiment is an example of the embodiment shown in FIG. 7. In FIG. 8, the terminal device may be the communication device 120 (for example, the UE 120) in FIG. 1 and FIG. 2, and the network device may be the network node 110 (for example, the BS 110) in FIG. 1 and FIG. 2. A method 800 includes the following steps.

810: The terminal device generates the indication information.

In this example, it is assumed that the update requirement is generated after the intelligent module is constructed, that is, the network device and the terminal device have formed an intelligent module (an intelligent module 1) based on early training, and the intelligent module is an intelligent module that is configured for CSI processing and that is in a common intelligent module of the network device and the terminal device. The intelligent module 1 includes four intelligent components, where an intelligent component 1 and an intelligent component 2 are on the network device side, and an intelligent component 3 and an intelligent component 4 are on the terminal device side.

The terminal device may actively request to update some intelligent components based on a change of the communication environment (for example, switching from an open area to a building-intensive area), a change of a service requirement (for example, changing to a video service), or a change of processing corresponding to some functions (for example, a compression rate), for example, update the intelligent component 2 on the network device side and the intelligent component 4 on the terminal device side. In this way, the indication information indicates the intelligent component 2 and the intelligent component 4.

810 is similar to 710, and is a possible implementation of 710. For content that is the same as 710, refer to the description of 710. Details are not described herein again.

820: The terminal device sends the indication information to the network device.

820 is similar to 720, and is a possible implementation of 720. For content that is the same as 720, refer to the description of 720. Details are not described herein again.

830: The network device determines the to-be-updated intelligent component.

The network device determines that the to-be-updated intelligent component is the intelligent component 2 at the local end and the intelligent component 4 on the terminal side based on an indication of the indication information.

840: The network device sends an update parameter to the terminal device.

It is assumed that in this example, the update parameter is delivered by the network device.

Correspondingly, the terminal device receives the update parameter. In this example, the indication information implicitly indicates the update request for the indication of the to-be-updated intelligent component, and the network device delivers the update parameter based on the indication of the indication information.

850: The terminal device updates the intelligent component based on the update parameter.

It is assumed that in this example, the update operation is an intelligent component training operation. In this way, the terminal device starts to train the intelligent component 4 based on the update parameter, for example, a hyperparameter, and freezes another intelligent component that does not need to be updated. In other words, a structure and/or a parameter (for example, a weight value and/or an offset) of the intelligent component that does not need to be updated in an entire training process remains unchanged. A simple implementation is to set a freezing parameter of an intelligent component that does not need to be updated during training to "True" (or layer.trainable = False). In this case, the structure and/or the parameter of the corresponding intelligent component do not change in a subsequent update process.

860: The network device updates the intelligent component based on the update parameter.

It is assumed that in this example, the update operation is an intelligent component training operation. In this case, the network device starts to train the intelligent component 2 based on the update parameter, for example, the hyperparameter, and freezes another intelligent component that does not need to be updated. In other words, the structure and/or the parameter (for example, a weight value and/or an offset) of the intelligent component that does not need to be updated in an entire training process remains unchanged. A simple implementation is to set a freezing parameter of an intelligent component that does not need to be updated during training to "True" (or layer.trainable = False). In this case, the structure and/or the parameter of the corresponding intelligent component do not change in a subsequent update process.

There is no absolute sequence between 850 and 860, and 850 and 860 are respectively a possible implementation of 740 and 750. For same content as 740 and 750, refer to descriptions of 740 and 750, and details are not described herein again.

870: The terminal device sends the update terminate indication to the network device.

In this example, when the training quickly converges to a termination condition, the terminal device may request the network device to terminate the training. Optionally, the terminal device can terminate the training only after the terminal device further needs to receive a termination indication acknowledged by the network device.

According to embodiments of this application, in this example, based on a bilateral training scenario and a manner of triggering through a terminal device request, update efficiency and reliability of the intelligent module are improved while learning performance of the intelligent module is ensured, and update costs and system resource waste are reduced.

An example in which the transmitting apparatus is the network device is used for describing a possible implementation of this embodiment of the present invention below.

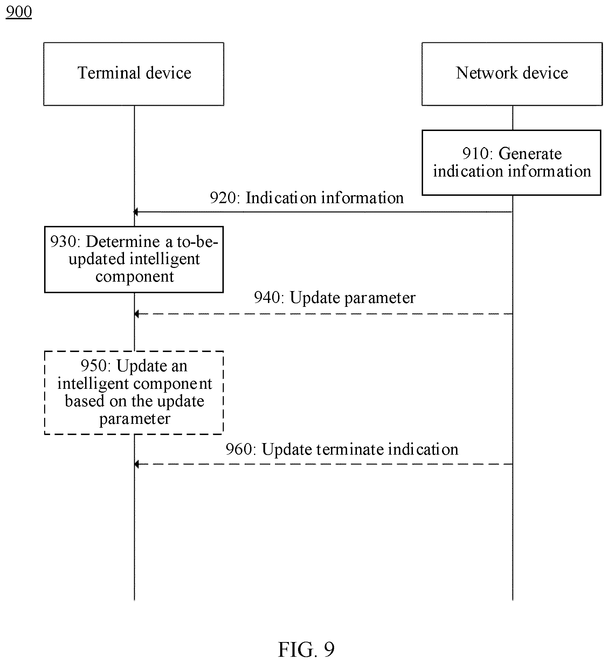

FIG. 9 is a schematic diagram of interaction of another example of an intelligent component updating method 700 according to an embodiment of this application. A difference between this embodiment and the embodiment shown in FIG. 7 lies in that this embodiment is an example of the embodiment shown in FIG. 7. A difference between this embodiment and the embodiment shown in FIG. 8 lies in that the transmitting apparatus in this embodiment is a network device. In FIG. 9, the terminal device may be the communication device 120 (for example, the UE 120) in

FIG. 1 and FIG. 2, and the network device may be the network node 110 (for example, the BS 110) in FIG. 1 and FIG. 2. A method 900 includes the following steps.

910: The network device generates the indication information.

In a possible implementation, an update requirement is generated after the intelligent module is constructed, that is, the network device and the terminal device have formed an intelligent module (an intelligent module 1) based on early training. The intelligent module is an intelligent module that is in a common intelligent module of the network device and the terminal device and that is configured for CSI processing. The intelligent module 1 includes four intelligent components, where an intelligent component 1 and an intelligent component 2 are on the network device side, and an intelligent component 3 and an intelligent component 4 are on the terminal device side. The network device may actively request, based on a change of the communication environment (for example, a change of multipath delay distribution), a service requirement change (for example, a change of a video service), or a change of processing corresponding to some functions (for example, a compression rate), to update some intelligent components, for example, update the intelligent component 4 on the terminal device side. In this way, the indication information indicates the intelligent component 4.

910 is similar to 710, and is a possible implementation of 710. For content that is the same as 710, refer to the description of 710. Details are not described herein again.

920: The network device sends the indication information to the terminal device.

920 is similar to 720, and is a possible implementation of 720. For content that is the same as 720, refer to the description of 720. Details are not described herein again.

930: The terminal device determines the to-be-updated intelligent component.

The terminal device determines that the to-be-updated intelligent component is the intelligent component 4 at the local end based on an indication of the indication information.

940: The network device sends an update parameter to the terminal device.

It is assumed that in this example, the update parameter is delivered by the network device. Correspondingly, the terminal device receives the update parameter. In this example, the indication information implicitly indicates the update request for the to-be-updated intelligent component. 950: The terminal device updates the intelligent component based on the update parameter.

It is assumed that in this example, the update operation is an intelligent component training operation. In this way, the terminal device starts to train the intelligent component 4 based on the update parameter, for example, a hyperparameter, and freezes another intelligent component that does not need to be updated. In other words, a structure and/or a parameter (for example, a weight value and/or an offset) of the intelligent component that does not need to be updated in an entire training process remains unchanged. A simple implementation is to set a freezing parameter of an intelligent component that does not need to be updated during training to "True" (or layer.trainable = False). In this case, the structure and/or the parameter of the corresponding intelligent component do not change in a subsequent update process.

950 is a possible implementation of 750. For content that is the same as 750, refer to the description of 750. Details are not described herein again.

960: The network device sends an update terminate indication to the terminal device.

In this example, when the training quickly converges to the termination condition, the network device may indicate that the training is terminated to the terminal device.

According to embodiments of this application, in this example, based on a unilateral training scenario and a manner of triggering through a network device request, update efficiency and reliability of the intelligent module are improved while learning performance of the intelligent module is ensured, and update costs and system resource waste are reduced. Compared with the terminal device sending indication information in the embodiment in FIG. 8, in this embodiment, the network device may indicate some intelligent components more properly and efficiently based on mastering of global network information, for example, comprehensively considering channel statuses of a plurality of terminal devices.

It should be understood that FIG. 8 and FIG. 9 respectively provide one of the possible implementations of the embodiment in FIG. 7 for ease of understanding of the embodiment in FIG. 7, but are not limited to the implementations in FIG. 8 and FIG. 9. For example, in the implementation in FIG. 8, the indication information may indicate only an intelligent component to be updated on the terminal device side, and the network device side does not need to perform update. In another example, the update terminate indication is sent by the network device to the terminal device. This is not limited in the present invention.

The following provides an intelligent module update method from a perspective of update configuration of updating an intelligent module.

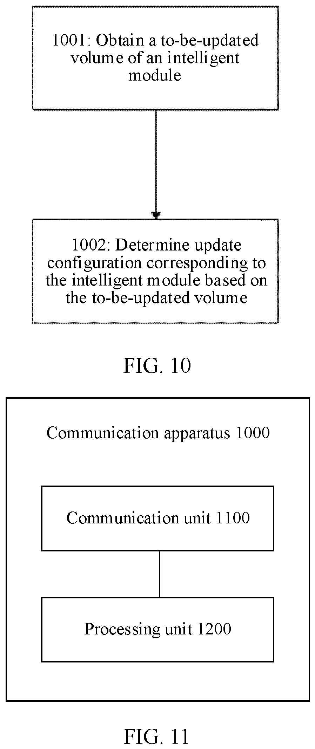

FIG. 10 is a schematic flowchart of an intelligent module update method according to an embodiment of this application. This embodiment may be independent of the embodiments shown in FIG. 7, FIG. 8, and FIG. 9. This embodiment may also be combined with the embodiments shown in FIG. 7, FIG. 8, and FIG. 9. For example, before the one or more intelligent components indicated by the indication information are updated, update configuration corresponding to the intelligent module may further be determined according to this embodiment. A relationship between this embodiment and another embodiment is not limited in this application. The method may be performed by a terminal device, or may be performed by a chip, a chip system, or a circuit configured in a terminal device, or may be performed by a network device, or may be performed by a chip, a chip system, or a circuit configured in a network device. The method includes the following steps.

1001: Obtain to-be-updated association information of an intelligent module.

Optionally, the to-be-updated association information of the intelligent module may be obtained at a local end; or the to-be-updated association information of the intelligent module indicated by a peer end is received, and the to-be-updated association information of the intelligent module is obtained. It may be understood that, if the local end is a terminal side, the peer end is a network side; and if the local end is a network side, the peer end is a terminal side.

Optionally, the to-be-updated association information includes a to-be-updated volume of the intelligent module. Optionally, the to-be-updated association information includes indication information of update configuration.

Optionally, the to-be-updated volume includes at least one of the following: a quantity of to-be-updated intelligent components in the intelligent module, a proportion of the quantity of to-be-updated intelligent components in a total quantity of intelligent components in the intelligent module, a quantity of to-be-updated parameters, a proportion of the quantity of to-be-updated parameters in a total quantity of parameters in the intelligent module, location information of the to-be-updated intelligent component in the intelligent module, and the like. Optionally, the parameter may include a weight value, an offset, and/or the like.

1002: Determine, based on the to-be-updated association information, the update configuration corresponding to the intelligent module.

Optionally, the update configuration includes at least one of the following: iteration count information, update dataset information, update termination condition information, cost function design information, an activation function, update index information, learning rate information, update algorithm information, and the like.

Optionally, the update configuration corresponding to the intelligent module may be determined based on the to-be-updated volume. The update configuration is determined based on the to-be-updated volume, so that the update configuration does not need to be specially indicated, and configuration overheads can be reduced. For example, the update configuration corresponding to the intelligent module is determined based on a ratio of the quantity of to-be-updated parameters to a total quantity of parameters of the intelligent module. For example, an intelligent module is implemented through a neural network. If there are 20 hidden layers, overall update (for example, training) needs to be performed, and an update dataset includes 200,000 samples, the to-be-updated volume of the intelligent module is five hidden layers. Then it may be determined that, based on a ratio of the quantity of to-be-updated parameters to a total quantity of parameters of the intelligent module (1/4), a dataset currently corresponding to the intelligent module may include 50,000 samples. This is not limited in this application. The update configuration corresponding to the intelligent module may alternatively be determined in another operation manner based on the proportion. For example,

$$\text{Para}_1 = \text{f}(rate, Para_0)$$

In the formula, $Para_0$ represents a quantity of parameters required for overall (the intelligent module) update, for example, an iteration count, a data set scale, and a learning rate. $Para_1$ represents a quantity of parameters required for an update of the intelligent component. $rate$ represents the to-be-updated volume. f represents an operation rule, which may be specified in advance or may be adapted based on an actual situation.

Optionally, a manner of determining update configuration corresponding to the intelligent module may alternatively be implemented in another manner. For example, a chart form that includes the to-be-updated volume and update configuration mapping relationship information is used.

| To-be-updated volume | | Update configuration | | |
|---|---|---|---|---|
| Quantity | Ratio | Iteration count | Dataset | ... |
| X | $\alpha$ | $\gamma(X \text{ or } \alpha) \cdot C$ | $\rho(X \text{ or } \alpha) \cdot D$ | |
| ... | ... | ... | ... | |

The chart shows only one form of the to-be-updated volume and the update configuration mapping relationship information. Different columns in the table may be randomly combined into another

table with a similar meaning. The parameters in the table are for reference only and do not represent any specific meaning.

Optionally, the update configuration corresponding to the intelligent module may be determined based on the indication information of the update configuration. It can be learned that the update configuration can be flexibly configured. During actual implementation, the indication information may be information related to the iteration (or training) count, or may be a dataset size or distribution information, or may be a relationship between the iteration (or training) count, a dataset size, or distribution and the original iteration (or training) count, or a dataset size and distribution, for example, proportion information. In addition, the indication information may further indicate other training-related parameter related information, for example, a learning rate, an update algorithm, and an update cost function.

Optionally, if it is determined that the subject for the update configuration corresponding to the intelligent module is not the subject for the update of the intelligent module, the update configuration may be indicated to the subject for the update of the intelligent module; or if it is determined that the subject for the update configuration corresponding to the intelligent module is the subject for the update of the intelligent module, the update configuration may alternatively be indicated to the peer end.

According to this embodiment of this application, corresponding update configuration can be determined based on the to-be-updated volume of the intelligent module, so that update efficiency and reliability of the intelligent module are improved while learning performance of the intelligent module is ensured, and update costs and system resource waste are reduced.

The method provided in embodiments of this application is described above in detail. A communication apparatus provided in embodiments of this application is described below in detail with reference to FIG. 11 to FIG. 13.

FIG. 11 is a schematic block diagram of a communication apparatus 1000 according to an embodiment of this application. As shown in the figure, the communication apparatus 1000 may include a communication unit 1100 and a processing unit 1200.

In a possible design, the communication apparatus 1000 may correspond to the terminal side apparatus in the foregoing apparatus embodiment, for example, the communication device 120 (for example, the terminal 120) in FIG. 1 or a module or an apparatus built in 120.

Specifically, when the transmitting apparatus in the method 700 in the embodiment in FIG. 7 is the terminal side apparatus, the communication apparatus 1000 may correspond to the transmitting apparatus in the method 700 in the embodiment in FIG. 7 of this application, and the communication apparatus 1000 may include units configured to perform the method performed by the transmitting apparatus in the method 700 in FIG. 7. In addition, the units in the communication apparatus 1000 and the foregoing other operations and/or functions are separately used to implement a corresponding procedure of the method 700 in FIG. 7.

When the communication apparatus 1000 is configured to perform the method 700 in FIG. 7, the communication unit 1100 may be configured to perform the step related to sending by the transmitting apparatus in steps 720 and 760 in the method 700, and configured to perform the step related to receiving by the transmitting apparatus in step 770, and the processing unit 1200 may be configured to perform steps 710 and 740 in the method 700.

Specifically, when the receiving apparatus in the method 700 in the embodiment in FIG. 7 is the terminal side apparatus, the communication apparatus 1000 may correspond to the receiving apparatus in the method 700 in the embodiment in FIG. 7 of this application, and the communication apparatus 1000 may include units configured to perform the method performed by the receiving apparatus in the method 700 in FIG. 7. In addition, the units in the communication apparatus 1000 and the foregoing other operations and/or functions are separately used to implement a corresponding procedure of the method 700 in FIG. 7.

When the communication apparatus 1000 is configured to perform the method 700 in FIG. 7, the communication unit 1100 may be configured to perform the step related to receiving by the receiving apparatus in steps 720 and 760 in the method 700, and configured to perform the step related to sending by the receiving apparatus in step 770, and the processing unit 1200 may be configured to perform steps 730 and 750 in the method 700.

Specifically, the communication apparatus 1000 may correspond to the terminal device in the method 800 according to the embodiment in FIG. 8 of this application. The communication apparatus 1000 may include units configured to perform the method performed by the terminal device in the method 800 in FIG. 8. In addition, the units in the communication apparatus 1000 and the foregoing other operations and/or functions are separately used to implement a corresponding procedure of the method 800 in FIG. 8.

When the communication apparatus 1000 is configured to perform the method 800 in FIG. 8, the communication unit 1100 may be configured to perform the step related to sending by the terminal device in steps 820 and 870 in the method 800, and configured to perform the step related to receiving by the terminal device in step 840, and the processing unit 1200 may be configured to perform steps 810 and 850 in the method 800.

Specifically, the communication apparatus 1000 may correspond to the terminal device in the method 900 according to the embodiment in FIG. 9 of this application. The communication apparatus 1000 may include units configured to perform the method performed by the terminal device in the method 900 in FIG. 9. In addition, the units in the communication apparatus 1000 and the foregoing other operations and/or functions are separately used to implement a corresponding procedure of the method 900 in FIG. 9.

When the communication apparatus 1000 is configured to perform the method 900 in FIG. 9, the communication unit 1100 may be configured to perform the step related to receiving by the terminal device in steps 920, 940, and 960 in the method 900, and the processing unit 1200 may be configured to perform steps 930 and 950 in the method 900.

Specifically, the communication apparatus 1000 may include units configured to perform the method performed by the terminal side in the method in FIG. 10. In addition, the units in the communication apparatus 1000 and the foregoing other operations and/or functions are separately used to implement a corresponding procedure of the method in FIG. 10.

When the communication apparatus 1000 is configured to perform the method in FIG. 10, the communication unit 1100 may be configured to perform a step related to information input and/or output, and receiving and/or sending in the method, for example, step 1001. The processing unit 1200 may be configured to perform step 1002 in the method.

It should be understood that a specific process in which the units perform the foregoing corresponding steps is described in detail in the foregoing apparatus embodiments, and for brevity, details are not described herein again.

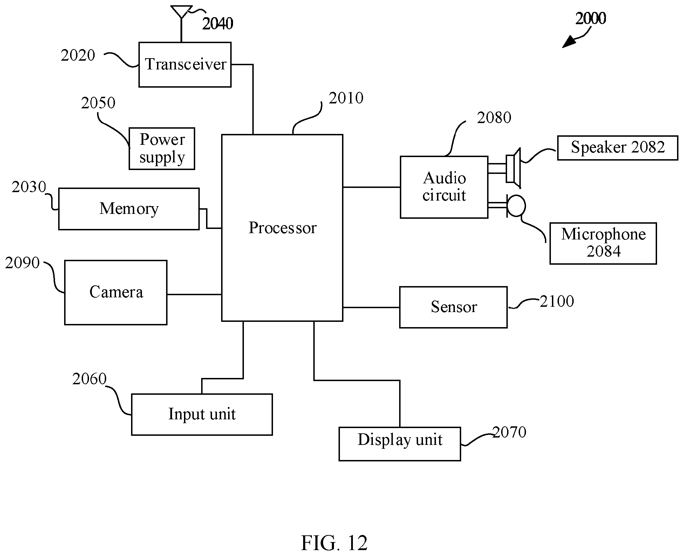

It should further be understood that when the communication apparatus 1000 is the terminal device, the communication unit 1100 in the communication apparatus 1000 may correspond to a transceiver 2020 in a terminal device 2000 shown in FIG. 12, and the processing unit 1200 in the communication apparatus 1000 may correspond to a processor 2010 in the terminal device 2000 shown in FIG. 12.

It should further be understood that when the communication apparatus 1000 is a chip or a chip system configured in the terminal device, the communication unit 1100 in the communication apparatus 1000 may be an input/output interface, an interface circuit, an output/input circuit, a pin, a related circuit, or the like, and the processing unit 1200 may be a processor, a processing circuit, or a logic circuit.

In a possible design, the communication apparatus 1000 may correspond to the network side apparatus in the foregoing apparatus embodiments, for example, the network node 110 (for example, the BS 110) in FIG. 1 or a module or an apparatus built in 110.

Specifically, when the transmitting apparatus in the method 700 in the embodiment in FIG. 7 is the network side apparatus, the communication apparatus 1000 may correspond to the transmitting apparatus in the method 700 in the embodiment in FIG. 7 of this application, and the communication apparatus 1000 may include units configured to perform the method performed by the transmitting apparatus in the method 700 in FIG. 7. In addition, the units in the communication apparatus 1000 and the foregoing other operations and/or functions are separately used to implement a corresponding procedure of the method 700 in FIG. 7.

When the communication apparatus 1000 is configured to perform the method 700 in FIG. 7, the communication unit 1100 may be configured to perform the step related to sending by the transmitting apparatus in steps 720 and 760 in the method 700, and configured to perform the step related to receiving by the transmitting apparatus in step 770, and the processing unit 1200 may be configured to perform steps 710 and 740 in the method 700.

Specifically, when the receiving apparatus in the method 700 in the embodiment in FIG. 7 is the network side apparatus, the communication apparatus 1000 may correspond to the receiving apparatus in the method 700 in the embodiment of FIG. 7 of this application, and the communication apparatus 1000 may include units configured to perform the method performed by the receiving apparatus in the method 700 in FIG. 7. In addition, the units in the communication apparatus 1000 and the foregoing other operations and/or functions are separately used to implement a corresponding procedure of the method 700 in FIG. 7.

When the communication apparatus 1000 is configured to perform the method 700 in FIG. 7, the communication unit 1100 may be configured to perform the step related to receiving by the receiving apparatus in steps 720 and 760 in the method 700, and configured to perform the step related to sending by the receiving apparatus in step 770, and the processing unit 1200 may be configured to perform steps 730 and 750 in the method 700.

Specifically, the communication apparatus 1000 may correspond to the network device in the method 800 in the embodiment in FIG. 8 of this application. The communication apparatus 1000 may include units configured to perform the method performed by the network device in the method 800 in FIG. 8. In addition, the units in the communication apparatus 1000 and the foregoing other operations and/or functions are separately used to implement a corresponding procedure of the method 800 in FIG. 8.

When the communication apparatus 1000 is configured to perform the method 800 in FIG. 8, the communication unit 1100 may be configured to perform the step related to receiving by the network device in steps 820 and 870 in the method 800, and configured to perform the step related to sending by the network device in step 840. The processing unit 1200 may be configured to perform steps 830 and 860 in the method 800.

Specifically, the communication apparatus 1000 may correspond to the network device in the method 900 in the embodiment in FIG. 9 of this application. The communication apparatus 1000 may include units configured to perform the method performed by the network device in the method 900 in FIG. 9. In addition, the units in the communication apparatus 1000 and the foregoing other operations and/or functions are separately used to implement a corresponding procedure of the method 900 in FIG. 9.

When the communication apparatus 1000 is configured to perform the method 900 in FIG. 9, the communication unit 1100 may be configured to perform the step related to sending by the network device in steps 920, 940, and 960 in the method 900. The processing unit 1200 may be configured to perform step 910 in the method 900.

Specifically, the communication apparatus 1000 may include units configured to perform the method performed by the network side in the method in FIG. 10. In addition, the units in the communication apparatus 1000 and the foregoing other operations and/or functions are separately used to implement a corresponding procedure of the method in FIG. 10.

When the communication apparatus 1000 is configured to perform the method in FIG. 10, the communication unit 1100 may be configured to perform a step related to information input and/or output, and receiving and/or sending in the method, for example, step 1001. The processing unit 1200 may be configured to perform step 1002 in the method.

It should be understood that a specific process in which the units perform the foregoing corresponding steps is described in detail in the foregoing apparatus embodiments, and for brevity, details are not described herein again.

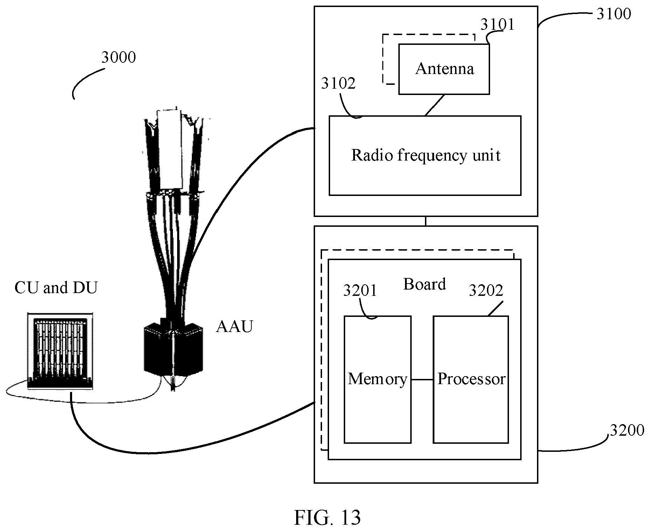

It should be understood that when the communication apparatus 1000 is the network device, the communication unit in the communication apparatus 1000 may correspond to a transceiver unit 3100 in a network device 3000 shown in FIG. 13. The processing unit 1200 in the communication apparatus 1000 may correspond to a processing unit 3200 in the network device 3000 shown in FIG. 13.

It should further be understood that, when the communication apparatus 1000 is a chip or a chip system configured in the network device, the communication unit 1100 in the communication apparatus 1000 may be an input/output interface, an interface circuit, an output/input circuit, a pin, a related circuit, or the like. The processing unit 1200 may be a processor, a processing circuit, or a logic circuit.

FIG. 12 is a schematic diagram of a structure of a terminal device 2000 according to an embodiment of this application. The terminal device 2000 may be applied to the system shown in FIG. 1 and FIG. 2. For example, the terminal device 2000 may be the communication device 120 in the system shown in FIG. 1 and FIG. 2, and is configured to perform functions of the terminal device in the foregoing method embodiments.

As shown in the figure, the terminal device 2000 includes the processor 2010 and the transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke the computer program from the memory 2030 and run the computer program, to control the transceiver 2020 to send or receive a signal. Optionally, the terminal device 2000 may further include an antenna 2040, configured to send, through a radio signal, uplink data or uplink control signaling outputted by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may alternatively be integrated into the processor 2010, or may be independent of the processor 2010. The processor 2010 may correspond to the processing unit in FIG. 11.

The transceiver 2020 may correspond to the communication unit in FIG. 11, and may be referred to as a transceiver unit. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 2000 shown in FIG. 12 can implement processes of the terminal device in the method embodiments shown in FIG. 7 to FIG. 10. Operations and/or functions of the modules in the terminal device 2000 are separately intended to implement corresponding procedures in the foregoing apparatus embodiments. For details, reference may be made to the descriptions in the foregoing apparatus embodiments. To avoid repetition, detailed descriptions are appropriately omitted herein.

The processor 2010 may be configured to perform an action that is implemented inside the terminal device and that is described in the foregoing apparatus embodiments. The transceiver 2020 may be configured to perform a sending action by the terminal device to the network device or a receiving action by the terminal device from the network device in the foregoing apparatus embodiments. For details, refer to the descriptions in the foregoing apparatus embodiments, and details are not repeated herein.

Optionally, the terminal device 2000 may further include a power supply 2050, configured to supply power to various components or circuits in the terminal device.

In addition, to make functions of the terminal device more perfect, the terminal device 2000 may further include one or more of an input unit 2060, a display unit 2070, an audio circuit 2080, a camera 2090, a sensor 2100, and the like, and the audio circuit may further include a speaker 2082, a microphone 2084, and the like.

FIG. 13 is a schematic diagram of a structure of a network device 3000 according to an embodiment of this application. The network device 3000 may be applied to the system shown in FIG. 1 and FIG. 2. For example, the network device 3000 may be the BS 110 in the system shown in FIG. 1 and FIG. 2, and is configured to perform functions of the network device in the foregoing method embodiments. It should be understood that the following is merely an example. In a future communication system, the network device may have another form and composition.

For example, in the 5G communication system, the network device 3000 may include a CU, a DU, and an AAU. Compared with a network device in an LTE communication system that includes one or more radio frequency units, for example, a remote radio unit (remote radio unit, RRU) and one or more baseband units (base band unit, BBU),

a non-real-time part of the original BBU is split off and redefined as the CU, which is responsible for processing a non-real-time protocol and service, some physical layer processing functions of the BBU are combined with the original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 13, is consistent with that of a conventional 4G network device. The CU and the DU are deployed on same hardware. It should be understood that FIG. 13 is merely an example, and constitutes no limitation on the protection scope of this application. For example, a deployment form may alternatively be that DUs are deployed in a BBU equipment room, CUs or DUs are deployed together, or CUs are centralized at a higher level.

The AAU 3100 may implement a transceiver function, and is referred to as a transceiver unit 3100, corresponding to the communication unit 1100 in FIG. 11. Optionally, the transceiver unit 3100 may also be referred to as a transceiver, a transceiver circuit, a transceiver, or the like, and may include at least one antenna 3101 and a radio frequency unit 3102. Optionally, the transceiver unit 3100 may include a receiving unit and a sending unit. The receiving unit may correspond to the receiver (or referred to as the receiver circuit), and the sending unit may correspond to the transmitter (or referred to as the transmitter circuit). CU and DU 3200 may implement an internal processing function, and is referred to as a processing unit 3200, corresponding to the processing unit 1200 in FIG. 11. Optionally, the processing unit 3200 may control the network device or the like, and may be referred to as a controller. The AAU, the CU, and the DU may be physically disposed together, or may be physically disposed separately.

In addition, the network device is not limited to a form shown in FIG. 13, and may alternatively be another form, for example, may include a BBU and an adaptive radio unit (adaptive radio unit, ARU), or include a BBU and an active antenna unit (active antenna unit, AAU); or may be a customer premises equipment (customer premises equipment, CPE), or may be another form, which is not limited in this application.

In an example, the processing unit 3200 may include one or more boards. A plurality of boards may jointly support a radio access network (such as an LTE network) of a single access standard, or may separately support radio access networks (such as an LTE network, a 5G network, a future network, or another network) of different access standards. The CU and DU 3200 further includes a memory 3201 and a processor 3202. The memory 3201 is configured to store necessary instructions and data. The processor 3202 is configured to control the network device to perform a necessary action, for example, is configured to control the network device to perform an operation procedure related to the network device in the foregoing method embodiments. The memory 3201 and the processor 3202 may serve one or more boards. In other words, a memory and a processor may be disposed on each board. Alternatively, a plurality of boards may share a same memory and a same processor. In addition, a necessary circuit may further be disposed on each board.

It should be understood that the network device 3000 shown in FIG. 13 can implement the functions of the network device related in the method embodiments in FIG. 7 to FIG. 10. Operations and/or functions of the units in the network device 3000 are separately intended to implement corresponding procedures performed by the network device in the foregoing method embodiments of this application. To avoid repetition, detailed descriptions are appropriately omitted herein. The structure of the network device shown in FIG. 13 is merely a possible form, but shall not constitute any limitation on embodiments of this application. This application does not exclude a possibility that there may be a network device structure in another form in the future. The CU and DU 3200 may be configured to perform an action that is implemented inside the network device and that is described in the foregoing method embodiments. The AAU 3100 may be configured to perform a sending action by the network device to the terminal device or a receiving action by the network device from the terminal device in the foregoing method embodiments. For details, refer to the descriptions in the foregoing method embodiments. Details are not described herein again.

An embodiment of this application further provides a processing apparatus, including a processor and a communication interface. The processor is configured to execute a computer program, so that the processing apparatus implements the methods in the foregoing method embodiments.

It should be understood that the processing apparatus may be a chip or a chip system. For example, the processing apparatus may be an FPGA, an ASIC, a system on chip (system on chip, SoC), a central processing unit (central processor unit, CPU), a network processor (network processor, NP), a DSP, a micro controller unit (micro controller unit, MCU), a PLD, or another integrated chip. The communication interface may be an input/output interface, an interface circuit, an output circuit, an input circuit, a pin, a related circuit, or the like on the chip or the chip system. The processor may alternatively be embodied as a processing circuit or a logic circuit.

During implementation, the steps of the foregoing apparatus may be completed through an integrated logic circuit of hardware in the processor, or instructions in a form of software. The steps of the apparatus disclosed with reference to embodiments of this application may be directly performed by a hardware processor, or may be performed by a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information from the memory and completes the steps of the foregoing apparatus with reference to hardware thereof. To avoid repetition, details are not described herein again.

It should be noted that the processor in embodiments of this application may be an integrated circuit chip, and has a signal processing capability. During implementation, the steps in the foregoing apparatus embodiments may be implemented through a hardware integrated logic circuit in the processor, or through instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The foregoing processor may implement or perform the apparatuses, the steps, and logical block diagrams that are disclosed in embodiments of this application. The general-purpose processor may be a microprocessor, or the processor may be any conventional processor, or the like. The steps of the apparatuses disclosed with reference to embodiments of this application may be directly performed by a hardware decoding processor, or may be performed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps of the foregoing apparatus with reference to hardware thereof. It may be understood that the memory in this embodiment of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and apparatus described in this specification includes, but is not limited to, these and any memory of another proper type.

According to the apparatuses provided in embodiments of this application, this application further provides a computer program product. The computer program product includes computer program code. When the computer program code is run on a computer, the computer is enabled to perform the method in any embodiment of the embodiments shown in FIG. 7 to FIG. 10.

According to the apparatuses provided in embodiments of this application, this application further provides a computer-readable medium. The computer-readable medium stores program code. When the program code is run on a computer, the computer is enabled to perform the method in any embodiment of the embodiments shown in FIG. 7 to FIG. 10.

According to the apparatuses provided in embodiments of this application, this application further provides a system, including the foregoing one or more terminal devices and one or more network devices.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state drive, SSD)), or the like.

The network device and the terminal device in the foregoing apparatus embodiments completely correspond to the network device and the terminal device in the apparatus embodiments. Corresponding steps are performed by corresponding modules or units. For example, the communication unit (receiver) performs the step of receiving or sending in the apparatus embodiments, and other steps than sending and receiving may be performed by the processing unit (processor). For functions of specific units, refer to corresponding apparatus embodiments. There may be one or more processors.

Terms such as "component", "module", and "system" used in this specification are intended to represent computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by figures, both an application that runs on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate through a local and/or remote process and based on, for example, a signal including one or more data packets (for example, data from two components interacting with another component in a local system, a distributed system, and/or across a network such as the Internet interacting with other systems through the signal).

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on a particular application and a design constraint condition of the technical solutions. A person skilled in the art may use different apparatuses to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing apparatus embodiments, and details are not described herein again.

In the several embodiments provided in this application, it should be understood that the disclosed system, apparatus, and apparatus may be implemented in other manners. For example, the described apparatus embodiments are merely examples. For example, the unit division is merely a logical function division and other division may be used in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may separately exist physically, or two or more units may be integrated into one unit.

In the foregoing embodiments, all or some of the functions of the function units may be implemented through software, hardware, firmware, or any combination thereof. When software is used to implement the embodiments, all or some of the embodiments may be implemented in a form of a computer program product. The computer program product includes one or more computer instructions (programs). When the computer program instructions (programs) are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the apparatuses described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.　An intelligent component update method, wherein the method comprises:
generating indication information, wherein the indication information indicates at least one of the following:

one or more intelligent components to be updated at a local end, wherein the one or more intelligent components belong to a first intelligent module, and
one or more intelligent components to be updated at a peer end, wherein the one or more intelligent components belong to a second intelligent module; and
sending the indication information.

2.　The method according to claim 1, wherein

the first intelligent module and the second intelligent module are a same intelligent module, or
the first intelligent module is an intelligent module of the local end, and the second intelligent module is an intelligent module of the peer end.

3. The method according to claim 1, wherein the indication information carries at least one piece of the following information:

information about the to-be-updated intelligent component or a non-to-be-updated intelligent component in the first intelligent module, and
information about the to-be-updated intelligent component or a non-to-be-updated intelligent component in the second intelligent module.

4. The method according to any one of claims 1 to 3, wherein the indication information further indicates an update request, and the indication information is sent through one or more pieces of signaling.

5. The method according to any one of claims 1 to 4, wherein the method further comprises:
updating the one or more intelligent components of the local end based on update parameter information.

6. The method according to claim 5, wherein the update parameter information is obtained from the peer end, and/or the update parameter information is obtained from the local end.

7. The method according to claim 5, wherein the updating the one or more intelligent components of the local end based on update parameter information comprises:

keeping an intelligent module parameter of the non-to-be-updated intelligent component in the first intelligent module unchanged; and
updating an intelligent module parameter of the one or more intelligent components based on the update parameter information.

8. The method according to any one of claims 1 to 7, wherein the update of the intelligent component comprises at least one of the following operations: intelligent component training, intelligent component adding, intelligent component deleting, intelligent component enabling, and intelligent component disabling.

9. The method according to any one of claims 1 to 8, wherein the indication information is sent periodically, aperiodically, or semi-permanently.

10. The method according to any one of claims 1 to 9, wherein the method further comprises:
sending an update terminate indication, or receiving an update terminate indication.

11. An intelligent component update method, wherein the method comprises:
receiving indication information, wherein the indication information indicates at least one of the following:

one or more intelligent components to be updated at a peer end, wherein the one or more intelligent components belong to a first intelligent module, and
one or more intelligent components to be updated at a local end, wherein the one or more intelligent components belong to a second intelligent module; and
determining a to-be-updated intelligent component.

12. The method according to claim 11, wherein

the first intelligent module and the second intelligent module are a same intelligent module, or
the first intelligent module is an intelligent module of the peer end, and the second intelligent module is an intelligent module of the local end.

13. The method according to claim 11, wherein the indication information carries at least one piece of the following information:

information about the to-be-updated intelligent component or a non-to-be-updated intelligent component in the first intelligent module, and
information about the to-be-updated intelligent component or a non-to-be-updated intelligent component in the second intelligent module.

**14.** The method according to any one of claims 11 to 13, wherein the indication information further indicates an update request, and the indication information is sent through one or more pieces of signaling.

**15.** The method according to any one of claims 11 to 14, wherein the method further comprises:
updating the one or more intelligent components of the local end based on update parameter information.

**16.** The method according to claim 15, wherein the update parameter information is obtained from the peer end, and/or the update parameter information is obtained from the local end.

**17.** The method according to claim 15, wherein the updating the one or more intelligent components of the local end based on update parameter information comprises:

keeping an intelligent module parameter of the non-to-be-updated intelligent component in the second intelligent module unchanged; and
updating an intelligent module parameter of the one or more intelligent components based on the update parameter information.

**18.** The method according to any one of claims 11 to 17, wherein the update of the intelligent component comprises at least one of the following operations: intelligent component training, intelligent component adding, intelligent component deleting, intelligent component enabling, and intelligent component disabling.

**19.** The method according to any one of claims 11 to 18, wherein the indication information is sent periodically, aperiodically, or semi-permanently.

**20.** The method according to any one of claims 11 to 19, wherein the method further comprises:
sending an update terminate indication, or receiving an update terminate indication.

**21.** A communication apparatus, wherein the apparatus comprises:
a processing unit, configured to generate indication information, wherein the indication information indicates at least one of the following:

one or more intelligent components to be updated at a local end, wherein the one or more intelligent components belong to a first intelligent module, and
one or more intelligent components to be updated at a peer end, wherein the one or more intelligent components belong to a second intelligent module; and
a communication unit, configured to send the indication information.

**22.** The apparatus according to claim 21, wherein

the first intelligent module and the second intelligent module are a same intelligent module, or
the first intelligent module is an intelligent module of the local end, and the second intelligent module is an intelligent module of the peer end.

**23.** The apparatus according to claim 21, wherein the indication information carries at least one piece of the following information:

information about the to-be-updated intelligent component or a non-to-be-updated intelligent component in the first intelligent module, and
information about the to-be-updated intelligent component or a non-to-be-updated intelligent component in the second intelligent module.

**24.** The apparatus according to any one of claims 21 to 23, wherein the indication information further indicates an update request, and the indication information is sent through one or more pieces of signaling.

**25.** The apparatus according to any one of claims 21 to 24, wherein the processing unit is further configured to:
update the one or more intelligent components of the local end based on update parameter information.

**26.** The apparatus according to claim 25, wherein the update parameter information is obtained from the peer end, and/or the update parameter information is obtained from the local end.

27. The apparatus according to claim 25, wherein the updating the one or more intelligent components of the local end based on update parameter information comprises:

keeping an intelligent module parameter of the non-to-be-updated intelligent component in the first intelligent module unchanged; and
updating an intelligent module parameter of the one or more intelligent components based on the update parameter information.

28. The apparatus according to any one of claims 21 to 27, wherein the update of the intelligent component comprises at least one of the following operations: intelligent component training, intelligent component adding, intelligent component deleting, intelligent component enabling, and intelligent component disabling.

29. The apparatus according to any one of claims 21 to 28, wherein the indication information is sent periodically, aperiodically, or semi-permanently.

30. The apparatus according to any one of claims 21 to 29, wherein the communication unit is further configured to: send an update terminate indication, or receive an update terminate indication.

31. The apparatus according to any one of claims 21 to 30, wherein the processing unit is a processor, and the communication unit is a transceiver.

32. A communication apparatus, wherein the apparatus comprises:
a communication unit, configured to receive indication information, wherein the indication information indicates at least one of the following:

one or more intelligent components to be updated at a peer end, wherein the one or more intelligent components belong to a first intelligent module, and
one or more intelligent components to be updated at a local end, wherein the one or more intelligent components belong to a second intelligent module; and
a processing unit, configured to determine a to-be-updated intelligent component.

33. The apparatus according to claim 32, wherein

the first intelligent module and the second intelligent module are a same intelligent module, or
the first intelligent module is an intelligent module of the peer end, and the second intelligent module is an intelligent module of the local end.

34. The apparatus according to claim 32, wherein the indication information carries at least one piece of the following information:

information about the to-be-updated intelligent component or a non-to-be-updated intelligent component in the first intelligent module, and
information about the to-be-updated intelligent component or a non-to-be-updated intelligent component in the second intelligent module.

35. The apparatus according to any one of claims 32 to 34, wherein the indication information further indicates an update request, and the indication information is sent through one or more pieces of signaling.

36. The apparatus according to any one of claims 32 to 35, wherein the processing unit is further configured to: update the one or more intelligent components of the local end based on update parameter information.

37. The apparatus according to claim 36, wherein the update parameter information is obtained from the peer end, and/or the update parameter information is obtained from the local end.

38. The apparatus according to claim 36, wherein the updating the one or more intelligent components of the local end based on update parameter information comprises:

keeping an intelligent module parameter of the non-to-be-updated intelligent component in the second intelligent module unchanged; and

updating an intelligent module parameter of the one or more intelligent components based on the update parameter information.

**39.** The apparatus according to any one of claims 32 to 38, wherein the update of the intelligent component comprises at least one of the following operations: intelligent component training, intelligent component adding, intelligent component deleting, intelligent component enabling, and intelligent component disabling.

**40.** The apparatus according to any one of claims 32 to 39, wherein the indication information is sent periodically, aperiodically, or semi-permanently.

**41.** The apparatus according to any one of claims 32 to 40, wherein the communication unit is further configured to: send an update terminate indication, or receive an update terminate indication.

**42.** The apparatus according to any one of claims 32 to 41, wherein the processing unit is a processor, and the communication unit is a transceiver.

**43.** A processing apparatus, comprising at least one processor and a communication interface, wherein

the communication interface is configured to input and/or output information; and
the processor is configured to execute a computer program, so that the method according to any one of claims 1 to 20 is implemented.

**44.** The processing apparatus according to claim 43, wherein the processing apparatus is a chip or a chip system.

**45.** A processing apparatus, comprising at least one processor and a memory, wherein

the memory is configured to store a computer program; and
the processor is configured to execute the computer program, so that the method according to any one of claims 1 to 20 is implemented.

**46.** The processing apparatus according to claim 45, wherein the processing apparatus is a chip or a chip system.

**47.** A computer-readable storage medium, comprising a computer program, wherein when the computer program is run on a computer, the method according to any one of claims 1 to 20 is implemented.

**48.** A computer program product, wherein when the computer program product is run on a computer, the method according to any one of claims 1 to 20 is implemented.

FIG. 1

FIG. 2

Input
layer 31

Hidden layer 32

Output
layer 33

FIG. 3

Intelligent module

L1 → L2 → ... → Li

FIG. 4

Input layer     Hidden layer 1     Hidden layer 2     Output layer

FIG. 5

Intelligent module for CSI processing

CSI feature extraction → CSI compression → CSI reconstruction

FIG. 6

700

```
┌─────────────────┐                              ┌─────────────────┐
│   Transmitting  │                              │                 │
│    apparatus    │                              │ Receiving apparatus │
└─────────────────┘                              └─────────────────┘
```

710: Generate indication information

720: Indication information

730: Determine a to-be-updated intelligent component

740: Update one or more intelligent components

750: Update one or more intelligent components

760: Update terminate indication

770: Update terminate indication

FIG. 7

800

```
┌─────────────────────┐                              ┌─────────────────────┐
│   Terminal device   │                              │   Network device    │
└─────────────────────┘                              └─────────────────────┘
            │                                                    │
   ┌─────────────────────┐                                      │
   │   810: Generate     │                                      │
   │ indication information│                                     │
   └─────────────────────┘                                      │
            │          820: Indication information              │
            │─────────────────────────────────────────────────▶│
            │                                         ┌─────────────────────┐
            │                                         │ 830: Determine a to-│
            │                                         │ be-updated intelligent│
            │                                         │     component       │
            │                                         └─────────────────────┘
            │          840: Update parameter                    │
            │◀ ─ ─ ─ ─ ─ ─ ─ ─ ─ ─ ─ ─ ─ ─ ─ ─ ─ ─ ─ ─ ─ ─ ─ ─│
   ┌─ ─ ─ ─ ─ ─ ─ ─ ─ ─ ─┐                        ┌─ ─ ─ ─ ─ ─ ─ ─ ─ ─ ─┐
   │   850: Update an     │                        │   860: Update an     │
   │ intelligent component│                        │ intelligent component│
   │  based on the update │                        │  based on the update │
   │     parameter        │                        │     parameter        │
   └─ ─ ─ ─ ─ ─ ─ ─ ─ ─ ─┘                        └─ ─ ─ ─ ─ ─ ─ ─ ─ ─ ─┘
            │        870: Update terminate indication           │
            │─ ─ ─ ─ ─ ─ ─ ─ ─ ─ ─ ─ ─ ─ ─ ─ ─ ─ ─ ─ ─ ─ ─ ─ ▶│
            │                                                    │
```

FIG. 8

900

```
┌─────────────────────┐                    ┌─────────────────────┐
│                     │                    │                     │
│   Terminal device   │                    │   Network device    │
│                     │                    │                     │
└──────────┬──────────┘                    └──────────┬──────────┘
           │                                          │
           │                               ┌──────────┴──────────┐
           │                               │   910: Generate     │
           │                               │ indication information│
           │                               └──────────┬──────────┘
           │        920: Indication information        │
           │◄─────────────────────────────────────────│
┌──────────┴──────────┐                                │
│ 930: Determine a to-be-│                              │
│   updated intelligent │                              │
│      component      │                                │
└──────────┬──────────┘       940: Update parameter    │
           │◄ ─ ─ ─ ─ ─ ─ ─ ─ ─ ─ ─ ─ ─ ─ ─ ─ ─ ─ ─ ─│
┌ ─ ─ ─ ─ ─┴─ ─ ─ ─ ─ ┐                                │
│    950: Update an     │                               │
│ intelligent component │                               │
│  based on the update  │                               │
│      parameter        │                               │
└ ─ ─ ─ ─ ─┬─ ─ ─ ─ ─ ┘  960: Update terminate indication│
           │◄ ─ ─ ─ ─ ─ ─ ─ ─ ─ ─ ─ ─ ─ ─ ─ ─ ─ ─ ─ ─│
           │                                          │
           │                                          │
```

FIG. 9

1001: Obtain a to-be-updated
volume of an intelligent
module

1002: Determine update
configuration corresponding to
the intelligent module based on
the to-be-updated volume

FIG. 10

Communication apparatus 1000

Communication unit 1100

Processing unit 1200

FIG. 11

FIG. 12

FIG. 13

# EP 4 254 892 A1

## INTERNATIONAL SEARCH REPORT

| | International application No. |
|---|---|
| | **PCT/CN2021/141164** |

### A. CLASSIFICATION OF SUBJECT MATTER

H04L 41/082(2022.01)i; H04L 67/5682(2022.01)i

According to International Patent Classification (IPC) or to both national classification and IPC

### B. FIELDS SEARCHED

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNKI, CNPAT, EPODOC, WPI: 本端, 对端, 发送端, 接收端, 智能组件, 智能模块, 神经网络, 更新, 删除, 重构, 重置, 指示, 通知, 训练, 人工智能, AI, smart device, update, learning, compressor, indicat+, transmission, receiving, training

### C. DOCUMENTS CONSIDERED TO BE RELEVANT

| Category* | Citation of document, with indication, where appropriate, of the relevant passages | Relevant to claim No. |
|---|---|---|
| X | CN 112068854 A (HANGZHOU HIKVISION DIGITAL TECHNOLOGY CO., LTD.) 11 December 2020 (2020-12-11)<br>description paragraphs [0086]-[0130] | 1-48 |
| X | WO 2018014729 A1 (SANECHIPS TECHNOLOGY CO., LTD.) 25 January 2018 (2018-01-25)<br>description page 8 line 9- page 23 line 5 | 1-48 |
| X | CN 111651180 A (SHANGHAI MXCHIP INFORMATION TECHNOLOGY CO., LTD.) 11 September 2020 (2020-09-11)<br>description, paragraphs [0039]-[0053] | 1-48 |
| X | CN 110875909 A (SHANGHAI HUAWEI TECHNOLOGIES CO., LTD.) 10 March 2020 (2020-03-10)<br>description paragraphs [0138]-[0197] | 1-48 |
| X | CN 106648716 A (BEIJING SUMAVISION TECHNOLOGIES CO., LTD.) 10 May 2017 (2017-05-10)<br>description, paragraphs [0039]-[0086] | 1, 11, 21, 32, 43-48 |
| A | CN 109361447 A (TSINGHUA UNIVERSITY) 19 February 2019 (2019-02-19)<br>entire document | 1-48 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 January 2022** | **01 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/141164**

| C. | DOCUMENTS CONSIDERED TO BE RELEVANT | |
|---|---|---|
| Category* | Citation of document, with indication, where appropriate, of the relevant passages | Relevant to claim No. |
| A | EP 3665973 A1 (SAMSUNG ELECTRONICS CO., LTD.) 17 June 2020 (2020-06-17)<br>entire document | 1-48 |

Form PCT/ISA/210 (second sheet) (January 2015)

INTERNATIONAL SEARCH REPORT
**Information on patent family members**

International application No.

**PCT/CN2021/141164**

| Patent document cited in search report | | | Publication date (day/month/year) | Patent family member(s) | | | Publication date (day/month/year) |
|---|---|---|---|---|---|---|---|
| CN | 112068854 | A | 11 December 2020 | None | | | |
| WO | 2018014729 | A1 | 25 January 2018 | CN | 107645746 | A | 30 January 2018 |
| CN | 111651180 | A | 11 September 2020 | None | | | |
| CN | 110875909 | A | 10 March 2020 | US | 2021176662 | A1 | 10 June 2021 |
| | | | | EP | 3820109 | A1 | 12 May 2021 |
| | | | | WO | 2020043114 | A1 | 05 March 2020 |
| CN | 106648716 | A | 10 May 2017 | None | | | |
| CN | 109361447 | A | 19 February 2019 | None | | | |
| EP | 3665973 | A1 | 17 June 2020 | CN | 111316714 | A | 19 June 2020 |
| | | | | KR | 20190053066 | A | 17 May 2019 |
| | | | | US | 2019141571 | A1 | 09 May 2019 |
| | | | | WO | 2019093835 | A1 | 16 May 2019 |
| | | | | IN | 202037023587 | A | 24 July 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011573227